# EUROPÄISCHE PATENTSCHRIFT

(11) **EP 0 397 082 B1**
(45) Veröffentlichungstag und Bekanntmachung des Hinweises auf die Patenterteilung: **21.09.1994**
(21) Anmeldenummer: 90108565.4
(22) Anmeldetag: 07.05.1990
(51) Int. Cl.: B01D 25/12

(54) **Verfahren und Vorrichtung zum Entwässern von Schlämmen und ähnlichen Substanzen**
Process and apparatus for dewatering sludges and similar products
Procédé et dispositif pour la déshydratation de boues et de produits analoques

(30) Priorität: 10.05.1989 DE 3915298; 11.04.1990 DE 4011776
(43) Veröffentlichungstag der Anmeldung: 14.11.1990
(73) Patentinhaber: Bähr, Albert, D-66564 Ottweiler (DE)
(72) Erfinder: Bähr, Albert, D-66564 Ottweiler (DE)
(74) Vertreter: Brose, D. Karl, Dipl.-Ing.

(56) Entgegenhaltungen:
- WO-A-87/02908
- DE-B- 1 188 556
- FR-A- 2 351 780
- US-A- 3 073 238
- US-A- 4 639 312

## Beschreibung

Die Erfindung betrifft ein Verfahren zum Entwässern von Schlamm und ähnlichen Substanzen, bei dem der Schlamm durch eine Pumpe unter Druck in mindestens eine Filterflächen aufweisende geschlossene Schlammkammer eingespeist und in der Schlammkammer ein die Entwässerung herbeiführender hydrostatischer Druck aufgebaut wird, wobei nach Erreichen eines festlegbaren Druckniveaus die Schlammkammer gegenüber der Pumpe getrennt und das Volumen der Schlammkammer anschließend verkleinert wird und ein mechanischer Entwässerungsdruck erzeugt wird, welcher größer ist als der erreichte hydrostatische Druck und wobei zum Abfördern des hergestellten Filterkuchens die Filterfläche mit dem Filterkuchen aus der Schlammkammer herausbewegt wird.

Es ist bekannt, den beispielsweise in Abwasser-Kläranlagen anfallenden Schlamm nach Zusatz organischer oder anorganischer Flockungsmittel oder Filterhilfsmittel in Kammerfilterpressen zu entwässern. Bei bekannten Kammerfilterpressen wird der Schlamm in allseitig geschlossene Filterkammern, die meistens zu einer Batterie aus einer Vielzahl von Filterkammern zusammengefaßt sind, eingespeist und das zu entwässernde Medium mit hohem Druck solange nachgepumpt, bis der gewünschte Gehalt an Trockensubstanz erreicht ist. Hierbei wird das enthaltene Wasser durch die aus Filtermaterial bestehenden Trennwandungen der einzelnen Filterkammern herausgeführt. Nachteil dieser bekannten Verfahrensweise und Konstruktion von Kammerfilterpressen ist es, daß bei hohem technischem Aufwand der Wirkungsgrad, mit welcher der Druck auf die zu entwässernde Substanz übertragen wird, von Kammer zu Kammer in Förderrichtung abnimmt.

Ein Verfahren der eingangs genannten Art ist aus der WO-A-8702908 bekannt. Bei diesem bekannten Verfahren werden offensichtlich die erreichbaren Trockensubstanzgehalte gegenüber Kammerfilterpressen üblicher Bauart verbessert. Bei diesen bekannten Verfahren wird jedoch ausschließlich intermittierend gearbeitet, wie es der Betriebsweise üblicher Kammerfilterpressen entspricht.

Aus der US-A-4 639 312 ist noch ein Verfahren zum Steuern der Betriebsweise von zwei Filterpressen bekannt, durch welches erreicht werden soll, die Handhabung von abrasiven koagulierten Feststoffen zu verringern und insbesondere einen sonst notwendigen Schwallbehälter zu vermeiden. Hierbei wird zunächst die eine Filterpresse in einem als "steady state" bezeichneten Zustand betrieben, in welchen die Feststoffe aus einem Behälter durch Öffnen eines Ventils zu der ersten Filterpresse geleitet werden, während ein zu der zweiten Filterpresse führendes Ventil geschlossen ist. Dieser Zustand dauert bis zu einem bestimmten Druckdifferential an, welcher durch ein Differentialdruckmeßgerät über das Filtertuch erfaßt wird. Ein Druckdifferentialsensor löst bei einem festgelegten Druckdifferential eine Zeitschaltung aus, durch welche das zu der zweiten Filterpresse führende Ventil geöffnet wird, während das erste Ventil geöffnet bleibt. In diesem Übergangszustand, dessen Zeitdauer durch die Zeitschaltung und durch das Ansteigen der Fördermenge in der Zufuhrleitung festgelegt ist, werden gleichzeitig beide Filterpressen mit Feststoffen gefüllt, wonach dann ein zweiter als "steady state" beschriebener Zustand erreicht wird, in welchem das erste Ventil geschlossen ist und lediglich das zweite Ventil geöffnet bleibt. Zu diesem Zeitpunkt kann dann die erste Filterpresse manuell entleert, gewaschen und wieder bereitgestellt werden.

Ausgehend von dem durch die WO-A-8 702 908 gegebenen Stand der Technik liegt der Erfindung die Aufgabe zugrunde, ein Verfahren und eine Vorrichtung zur Durchführung des Verfahrens zu schaffen, welche bei geringerem technischem Aufwand einen wesentlich verbesserten Wirkungsgrad und darüber hinaus einen verbesserten Durchsatz gewährleistet.

Bei einem Verfahren der eingangs genannten Art wird diese Aufgabe dadurch gelöst, daß mehrere Schlammkammern alternierend taktweise betrieben werden, während die den hydrostatischen Druck erzeugende Pumpe kontinuierlich angetrieben wird, daß mindestens jeweils eine Schlammkammer bis zum Erreichen des festlegbaren Druckniveaus von der Pumpe gespeist wird, daß dann die Einspeisung durch die Pumpe auf jeweils mindestens eine zweite der Schlammkammern umgeschaltet wird, daß während des Aufbaus des hydrostatischen Entwässerungsdruckes in der zweiten Schlammkammer die zusätzliche mechanische Entwässerung in der ersten Schlammkammer durchgeführt wird, daß bei Erreichen des festlegbaren Druckniveaus des hydrostatischen Drucks in der zweiten Schlammkammer die Einspeisung durch die Pumpe auf mindestens eine dritte der Schlammkammern umgeschaltet wird, daß während des Aufbaus des hydrostatischen Entwässerungsdrucks in der dritten Schlammkammer die zusätzliche mechanische Entwässerung in der zweiten Schlammkammer durchgeführt wird und gleichzeitig der Filterkuchen aus der ersten der Schlammkammern ausgetragen wird, derart, daß die Schlammzufuhr und der Austrag des Filterkuchens quasi kontinuierlich, jedoch aus verschiedenen Schlammkammern erfolgt. Auf diese Weise wird gewährleistet, daß ab dem Druckniveau, ab welchem eine weitere Entwässerung durch den hydrostatischen Druck nur mit entsprechend hohen Energiekosten und entsprechend konstruktivem Aufwand möglich wäre, die dann gegenüber der Pumpe isolierte Schlammkammer mechanisch zusammengedrückt wird und eine weitere Entwässerung mittels des mechanisch erzeugten Drucks erfolgt. Außerdem wird das bei bekannten Entwässerungsverfahren mittels derartiger Filterpressen aufwendige Auswechseln der Filtertücher vermieden.

Bei einer besonders bevorzugten Ausführungsform nach der Erfindung wird der Schlamm in jede der Schlammkammern an mehreren Punkten gleichzeitig eingepumpt. Hierdurch wird der gewählte hydrostatische Druck vergleichsweise schnell erreicht, da vermieden wird, daß der Filtrationsdruck durch die gesamte, in der Kammer befindliche Substanz übertragen werden muß.

Wie oben erwähnt, ist weiterer Gegenstand der Erfindung eine Vorrichtung zur Durchführung des oben beschriebenen Verfahrens, mit einer allseitig geschlossenen Schlammkammer, welche Filterflächen und einen Schlammeinlaß aufweist, der über eine Leitung mit einer den Filtrationsdruck erzeugenden Pumpe verbunden ist, wobei die Filterflächen in der Schlammkammer zwischen stationären und beweglichen Druckplatten angeordnet sind und nach Abschalten der Pumpe mechanisch mit Druck beaufschlagbar sind, und wobei die Schlammkammer einen die beweglichen Druckplatten enthaltenden Deckel und einen die ortsfesten Druckplatten enthaltenden Boden aufweist.

Bekannte, als Kammerfilterpressen bezeichnete Vorrichtungen betehen aus einem feststehenden Kopfstück und einer großen Anzahl gerillter Platten aus Eisen, Holz, Hartgummi oder Sonderstahl und anderen Werkstoffen, die an eisernen Gleitschienen aufgehängt und mit den Filtertüchern überzogen sind. Mittels eines beweglichen Kopfstücks und einer Spindel werden die Platten zusammengepreßt, was bei großen Filtereinheiten hydraulisch geschehen kann. Zwischen je zwei derartigen Platten entstehen hierbei Hohlräume durch die erhabenen Ränder der Platten oder durch Hohlrahmen, die zwischen je zwei Platten eingehängt werden. Die Kammerfilterpressen haben in der Mitte der Platte oder am Rande einen Füllkanal, wobei die Füllung unter Druck, erzeugt durch die Pumpe, erfolgt. Das Filtrat tritt durch die Tücher und fließt hinter diesen durch Rillen herunter und läuft durch einen Kanal zu Ablaufhähnen jeder Platte. Bei einigen Konstruktionen ist zum Waschen des Filterkuchens ein besonderer Waschwasserkanal vorgesehen, wobei nach dem Waschen meist durch Preßluft getrocknet wird. Zur Entleerung werden die Platten nach Öffnung der Presse auseinandergezogen, wobei der Filterkuchen dann entweder von selbst herausfällt oder von Hand herausgestoßen werden muß. Das Entleeren, Reinigen der Dichtungsflächen, Zusammensetzen und Schließen der Pressen erfordern viel Handarbeit und Zeit, wobei der Verschleiß an Filtertüchern groß ist.

Eine Vorrichtung der oben genannten Art ist ebenfalls aus der bereits erwähnten WO-A-8702908 bekannt. Die durch diesen Stand der Technik bekannte Konstruktion ist ausgesprochen aufwendig und umständlich. Darüber hinaus ist diese Vorrichtung lediglich in der Lage, die zu entwässernden Substanzen portionsweise und keinesfalls kontinuierlich zu entwässern.

Erfindungsgemäß wird eine vollständig neuartige Vorrichtung der eingangs genannten Art vorgeschlagen, welche dadurch gekennzeichnet ist, daß mehrere Schlammkammern parallel zueinander angeordnet sind, daß die Schlammeinlässe der Schlammkammern über die Schließventile an eine Sammelleitung angeschlossen sind, daß die Sammelleitungen Sperrventile aufweisen, daß die Sammelleitungen der Schlammkammern an eine Hauptleitung angeschlossen sind, daß die Hauptleitung kontinuierlich mit dem Druck der Pumpe beaufschlagt ist, und daß eine Steuerung vorgesehen ist, welche die Sperrventile, die Schließventile, die Hochdruckerzeuger und den Antrieb der Filterflächen entsprechend dem Arbeitstakt der einzelnen Schlammkammern derart steuert, daß die Schlammzufuhr und der Austrag des Filterkuchens quasi kontinuierlich, jedoch aus verschiedenen Schlammkammern erfolgt.

Hierbei besteht eine besonders bevorzugte Ausführungsform darin, daß die Schlammkammer aus den Filterflächen in Form eines horizontal und geradlinig intermittierend umlaufenden Filterbandes und einer Druckmembran besteht, und daß die Druckmembran mit rund umlaufenden Dichtleisten versehen ist, welche in der geschlossenen Stellung dichtend an dem Filterband anliegen, und daß für die beweglichen Druckplatten und die Dichtleisten Führungen für die Vertikalbewegung vorgesehen sind. Hierdurch wird der Vorteil erzielt, daß der erzeugte Filterkuchen mit dem Filterband aus der Schlammkammer herausgefahren werden kann und gleichzeitig ein neuer Filterbandabschnitt in die Schlammkammer hereinbewegt wird.

Im einzelnen ist es hierbei bevorzugt, daß der Deckel mittels der beweglichen Druckplatten gegenüber dem Boden zwischen einer geschlossenen und einer geöffneten Stellung bewegbar ist.

Bei einer hierzu bevorzugten Ausführungsform sind die Führungen für die beweglichen Druckplatten und die Dichtleisten als gemeinsame Führungen ausgebildet, indem die Führungen als aufrecht stehende Zapfen an einer der Druckplatten eines Druckplattenpaares ausgebildet sind, welche in Führungsbohrungen der Dichtleisten und der jeweils anderen Druckplatte gleiten.

Um eine möglichst einfache Führung der Dichtleisten zu gewährleisten, besteht eine vorteilhafte Einzelheit nach der Erfindung darin, daß die Dichtleisten aus einer starren Versteifungsleiste aus Kunststoff od. dgl. und einen um den Umfang der Druckmembran umlaufenden Dichtkörper aus flexiblem Material bestehen, daß die Versteifungsleisten auf der Oberseite des Randbereichs der Druckmembran und der Dichtkörper der Versteifungsleiste gegenüberliegend auf der Unterseite des Randbereichs befestigt ist, daß die Dichtleiste einen über den Umfang der Druckmembran vorstehenden Rand aufweist, und daß die Führungsbohrungen in dem Rand ausgebildet sind.

Im einzelnen ist es hierbei vorteilhaft, daß eine Vielzahl von Druckplattenpaaren nebeneinander liegend angeordnet ist, wobei besonders bevorzugt die unteren Druckplatten starr gelagert sind und die oberen Druckplatten über hydraulische Hochdruckerzeuger gegen die unteren Druckplatten zustellbar sind oder umgekehrt. Durch diese Konstruktion läßt sich in einfachster Weise die gesamte Schlammkammer nach Isolation derselben gegenüber der Druckpumpe mit einem hohen mechanischen Druck beaufschlagen.

Die Druckmembran ist bei der Vorrichtung nach der Erfindung mindestens in einem Mittelbereich mit den beweglichen Druckplatten verbunden, an der Berührungsfläche der Dichtleisten mit dem Filterband sind auswechselbare Verschleißteile angeordnet, und die Druckmembran ist als mit den Dichtleisten verbundene Gummidecke ausgebildet.

Bei einer ganz besonders bevorzugten Ausführungsform nach der Erfindung ist vorgesehen, daß die Dichtleisten positiv gesteuert und durch einen Antrieb auf und ab bewegbar sind, und daß der Antrieb durch eine Anzahl von an den Dichtleisten angeordneten steuerbaren Druckerzeugern gebildet ist, welche die Dichtleisten gegenüber der oberen Druckplatte wahlweise in Richtung des Filterbandes drücken und von dieser abheben. Durch diese Ausführungsform wird eine starke Vereinfachung der Konstruktion bei sicherer Betriebsweise erzielt, indem durch Betätigung der Druckerzeuger bzw. den Antrieb der Dichtleisten die Schlammkammer unabhängig vom Druck- und Öffnungshub der beweglichen Druckplatten geöffnet und geschlossen werden kann. Hierdurch lassen sich die Hochdruckerzeuger mit geringerem Hub und in einer einfachen Konstruktion ausführen.

Im einzelnen ist es dabei bevorzugt, daß die Druckerzeuger als Pneumatikzylinder ausgebildet sind, welche zum Öffnen und Schließen der Schlammkammer durch Heben und Senken der Dichtleisten betätigbar sind, daß die Pneumatikzylinder an den oberen Druckplatten abgestützt sind, derart, daß durch Kompression der in den Pneumatikzylindern befindlichen Luft beim Druckhub der oberen Druckplatten der Dichtdruck erhöht wird, daß an jedem Ende einer oberen Druckplatte zwei Pneumatikzylinder angeordnet sind, und daß an den an den Stirnseiten der Schlammkammer angeordneten Druckplatten eine Anzahl von Pneumatikzylindern über deren Länge verteilt angeordnet sind.

Eine vorteilhafte Ausführungsform der Erfindung kann dadurch geschaffen werden, daß die Kolbenstangen der Pneumatikzylinder gelenkig mit der Versteifungsleiste der Dichtleiste verbunden sind, und daß die Verbindung der Kolbenstangen mit der Versteifungsleiste der Mittellinie des Dichtkörpers gegenüberliegend angeordnet sind. Hierdurch wird die möglichst gleichmäßige Verteilung des Dichtdruckes gewährleistet.

Bei der Ausführungsform, bei welcher die Dichtleisten einen eigenen Antrieb aufweisen, können in vorteilhafter Weise die hydraulischen Hochdruckerzeuger als Einfachzylinder mit einem Preßkolben ausgebildet sein. Hierdurch wird eine bauliche Vereinfachung erzielt, da die Schließbewegung der Schlammkammer über die Pneumatikzylinder bzw. den gesonderten Antrieb der Dichtleisten erfolgt.

Die Dichtleisten an der Druckmembran können alternativ zu der oben beschriebenen Ausführungsform in Richtung des Filterbandes federvorgespannt sein, wobei die die Dichtleisten beaufschlagenden Federn an den beweglichen Druckplatten abgestützt sind, derart, daß beim Druckhub gleichzeitig der Dichtdruck erzeugt wird. Die Federvorspannung ist hierbei derart gewählt, daß in der Stellung der beweglichen Druckplatten vor dem Druckhub der durch die Federn erzeugte Dichtungsdruck auf jeden Fall ausreicht, um zu verhindern, daß unter dem durch die Pumpe erzeugten hydrostatischen Druck der Schlamm seitlich zwischen der Druckmembran und dem Filterband austreten kann.

Eine besonders bevorzugte Ausführungsform nach der Erfindung kann dadurch geschaffen werden, daß die hydraulischen Hochdruckerzeuger die stationären Druckplatten mit den beweglichen Druckplatten zu geschlossenen Rahmen verbinden. Hierdurch wird mit einfachsten Mitteln eine hohe mechanische Festigkeit geschaffen, wobei entsprechend hohe erreichbare Drücke innerhalb der geschlossenen Rahmen aufgenommen werden und irgendwelche stark ausgebildete Widerlager in Gestalt von Fundamenten od. dgl. nicht erforderlich sind.

Im einzelnen ist es ferner vorteilhaft, daß die hydraulischen Hochdruckerzeuger als zwei Kolben enthaltende Doppelzylinder ausgebildet sind, wobei in jedem Doppelzylinder der eine Kolben als Preßkolben und der zweite Kolben als Schließkolben ausgebildet ist. Hierdurch ist es möglich, unabhängig vom tatsächlichen Druckhub der beweglichen Druckplatten ein Schließen der Schlammkammer durch Betätigung der Schließkolben herbeizuführen, so daß diese auf jeden Fall durch die Dichtleisten abgeschlossen ist.

Bei einer besonders bevorzugten Ausführungsform nach der Erfindung weist die Schlammkammer mehrere Schlammeinlässe auf, so daß hierdurch eine ausgesprochen schnelle Füllung der Schlammkammer und ein Aufbau des hydrostatischen Drucks mit hohem Wirkungsgrad möglich ist.

Die Schlammeinlässe sind hierbei bevorzugt in der Mittelachse der Druckmembran angeordnet, wobei die Schlammeinlässe über je eine Verbindungsleitung mit einer Sammelleitung verbunden sind und wobei die Schlammeinlässe mit Schließventilen und die Sammelleitung mit einem Sperrventil versehen sind. Hierdurch läßt sich der durch die Pumpe erzeugte Druck wirksam gegenüber der Schlammkammer absperren, wenn der durch die Hochdruckerzeuger erfolgende Druckhub der Vorrichtung erfolgt.

Um ein Waschen des Filterkuchens zu ermöglichen, sind bevorzugt in der Druckmembran ein oder mehrere über Ventile gesteuerte Auslässe einer Leitung für ein Wasch- oder Reinigungsmedium ausgebildet.

Zur Verbesserung der Entwässerung und Erleichterung des Abführens des Filtrats ist bei einer bevorzugten Ausführungsform nach der Erfindung zwischen dem Filterband und den unteren Druckplatten eine Platte mit nach oben offenen Filtratkanälen vorgesehen. Auf dieser Platte liegt das Filterband unmittelbar auf. Hiebei ist es daher bevorzugt, die Platte aus einem reibungsarmen Kunststoff herzustellen, da während des Herausfahrens des Filterkuchens und des Einfahrens eines neuen Filterbandabschnittes dieses unmittelbar auf der Platte gleitet.

Im folgenden wird die Erfindung anhand von in den Zeichnungen beispielhaft veranschaulichten Ausführungsformen näher erläutert. Es zeigt:
Fig. 1 eine stark schematische geschnittene Seitenansicht eines Ausschnitts einer Vorrichtung nach der Erfindung;
Fig. 2 eine Draufsicht auf die Vorrichtung gemäß Fig. 1 im verkleinerten Maßstab;
Fig. 3 eine Schnittansicht längs der Linie III-III von Fig. 1 im verkleinerten Maßstab;
Fig. 4 eine Schnittansicht längs der Linie IV-IV von Fig. 1 im verkleinerten Maßstab;
Fig. 5 eine Ausführungsform nach der Erfindung, bei welcher mehrere Kammern parallel zueinander angeordnet sind und taktweise alternierend betrieben werden, wobei ferner in Fig. 1 weggelassene Einzelheiten dargestellt sind;
Fig. 6 eine Schnittansicht längs der Linie VI-VI in Fig. 5;
Fig. 7 eine schematische Darstellung der Steuerung für die Ausführungsform gemäß Fig. 5 und 6;
Fig. 8 eine schematische Draufsicht auf eine Ausführungsform nach der Erfindung, bei welcher die Abdichtung der Schlammkammer mit einem gesonderten Antrieb versehen ist;
Fig. 9 eine teilweise geschnittene Draufsicht der Vorrichtung gemäß Fig. 8, wobei die Schnittebene etwa längs der Linie IX-IX in Fig. 11 verläuft;
Fig. 10 eine Seitenansicht der Vorrichtung in stark schematischer Darstellung in Richtung des Pfeils X in Fig. 9;
Fig. 11 eine Schnittansicht längs der Linie XI-XI in Fig. 9;
Fig. 12 eine Schnittansicht längs der Linie XII-XII in Fig. 9;
Fig. 13 eine Ansicht der Vorrichtung in Richtung des Pfeils XIII in Fig. 10;
Fig. 14 eine Schnittansicht längs der Linie XIV-XIV in Fig. 10, wobei die Vorrichtung beim Einspeisen und Aufbringen des Pumpendrucks veranschaulicht ist;
Fig. 15 eine Fig. 14 entsprechende Ansicht, wobei jedoch lediglich ein Ausschnitt aus Fig. 14 gezeigt ist und wobei die Vorrichtung in dem Zustand veranschaulicht ist, in welchem durch die beweglichen Druckplatten der Preßdruck aufgebracht wird;
Fig. 16 eine Fig. 14 entsprechende Ansicht beim Austragen des fertig gepreßten Schlammkuchens aus der Vorrichtung;
Fig. 17 eine schematische seitliche Schnittansicht einer Anordnung von zwei übereinander angeordneten Vorrichtungen gemäß den Fig. 8 ff.;
Fig. 18 eine Schnittansicht längs der Linie XVIII-XVIII von Fig. 17 und
Fig. 19 eine Schnittansicht eines äußeren Randbereiches der Schlammkammer, welche Einzelheiten des Antriebs der Dichtleisten gemäß der Ausführungsform nach den Fig. 8 bis 17 zeigt.

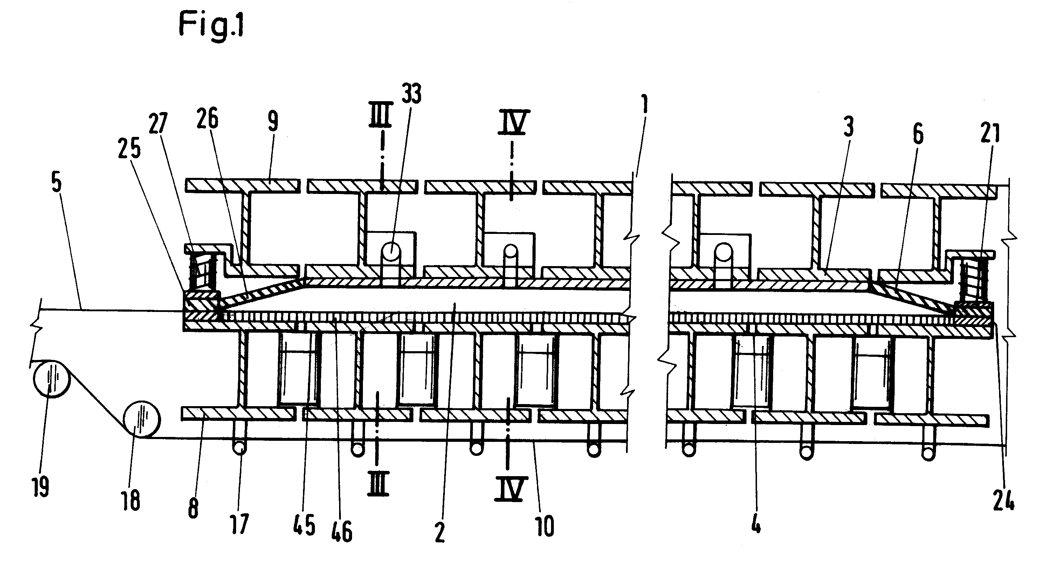

Die in Fig. 1 bis 4 schematisch veranschaulichte, allgemein mit 1 bezeichnete Vorrichtung nach der Erfindung dient zum Entwässern von Schlamm und ähnlichen Substanzen und ist insbesondere für Schlämme gedacht, welche die Verwendung von Flockungsmittel ausschließen, wie beispielsweise Keramikschlämme oder Lebensmittelschlämme.

Die Vorrichtung 1 weist eine allseitig geschlossene Schlammkammer 2 auf, welche aus einem Deckel 3 und einem Boden 4 besteht. Die Schlammkammer 2 enthält eine Filterfläche 5, welche den Filterkuchen zurückhält und das Filtrat hindurchläßt. Über der Filterfläche 5 ist eine Druckmembran 6 angeordnet, mittels derer in der weiter unten beschriebenen Weise ein zusätzlicher mechanischer Druck erzeugt wird, nachdem ein festlegbares Druckniveau eines hydrostatischen Drucks erreicht wurde, welcher mittels einer Pumpe 7 in der Schlammkammer 2 aufgebaut wird.

Wie veranschaulicht, ist in der Schlammkammer 2 die Filterfläche 5 zwischen Bestandteil des Bodens 4 bildenden stationären Druckplatten 8 und Bestandteil des Deckels 3 bildenden beweglichen Druckplatten 9 angeordnet. Die Druckplatten 8 und 9 haben, wie aus Fig. 1 ersichtlich, beim Ausführungsbeispiel die Form von Doppel-T-Trägern, da diese Form eine kostengünstige Möglichkeit zur Aufnahme hoher Drücke darstellt.

Der Deckel 3 ist auf die weiter unten beschriebene Weise vom Boden 4 abhebbar, so daß die Filterfläche 5 zugänglich wird.

Bei der bevorzugten Ausführungsform ist die Filterfläche 5 durch ein horizontal und geradlinig intermittierend umlaufendes Filterband 10 gebildet, welches bei geöffneter Schlammkammer 2 durch einen nicht dargestellten Antrieb bewegbar ist.

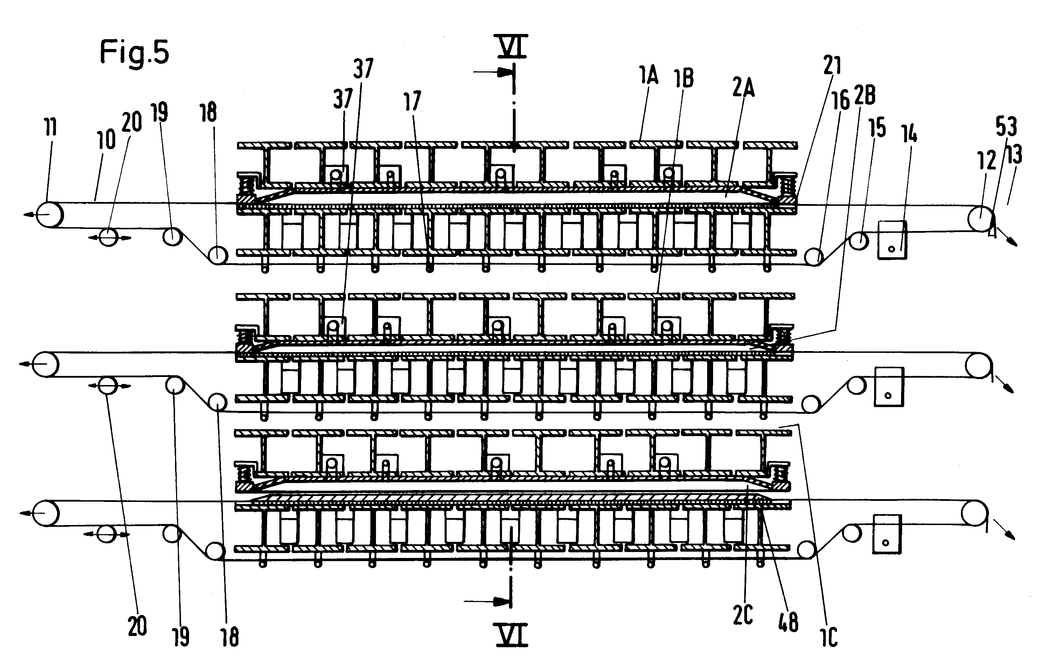

Wie sich aus Fig. 1 und teilweise aus Fig. 5 ergibt, ist das Filterband 10 ausgehend vom linken Ende von Fig. 5 auf einer federbelasteten Umlenkrolle 11 geführt und verläuft anschliessend durch die Schlammkammer 2. Außerhalb der Schlammkammer 2 ist eine weitere Umlenkrolle 12 vorgesehen, an welcher der Abwurf 13 für den Filterkuchen vorgesehen ist. An dieser Stelle ist ein Schaber oder eine Klinge 53 vorgesehen, welche den Filterkuchen 48 von dem Filterband 10 löst.

In Umlaufrichtung hinter der Umlenkrolle 12 läuft das Filterband 10 durch eine Wascheinrichtung 14, über weitere Umlenkrollen 15 und 16 und wird unter der Vorrichtung 1 auf Stäben 17 od. dgl. hindurchgeführt. Anschließend läuft das Filterband 10 über Rollen 18 und 19, sowie eine weitere Rolle 20 zurück zur Umlenkrolle 11, wobei die Rolle 20 mit einer nicht dargestellten bekannten Einrichtung für den Geradlauf das Filterbandes 10 versehen ist.

Wie ferner gezeigt, ist die die Schlammkammer 2 einschließende Druckmembran 6 mit rund umlaufenden Dichtleisten 21 versehen, welche in der geschlossenen Stellung dichtend an dem Filterband 10 anliegen und daher die Schlammkammer 2 allseitig schließen.

Die durch das Filterband 10 gebildete Filterfläche 5 und die Druckmembran 6 liegen somit zwischen den paarweise einander gegenüberliegenden ortsfesten und beweglichen Druckplatten 8 und 9, wobei eine Vielzahl von nebeneinander liegenden Druckplattenpaaren vorgesehen ist. Die unteren Druckplatten 8 sind hierbei starr gelagert, wobei die oberen Druckplatten 9 gegenüber den unteren Druckplatten 8 durch mit 22 bezeichnete hydraulische Hochdruckerzeuger bewegbar sind.

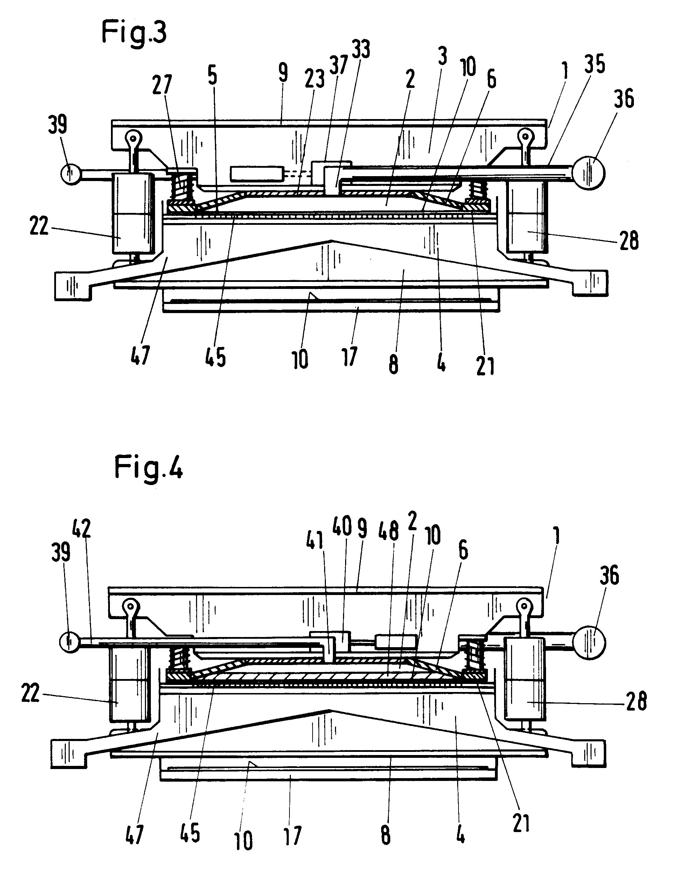

Wie sich aus der Schnittansicht gemäß Fig. 3 und 4 ergibt, ist die Druckmembran 6 mit ihrem mittleren Bereich 23 an den beweglichen Druckplatten 9 befestigt.

Wie ferner aus diesen Figuren ersichtlich, sind an der Berührungsfläche 24 zwischen den Dichtleisten 21 und dem Filterband 10 Verschleißteile 25 vorgesehen, welche auswechselbar mit den Dichtleisten 21 verbunden sind.

Die die Schlammkammer 2 umschließenden rund umlaufenden Dichtleisten 21 an der Druckmembran 6, welche als Gummidecke 26 ausgebildet ist, sind in Richtung des Filterbandes 10 durch Federn 27 vorgespannt, so daß die Dichtleisten 21 vor dem Druckhub der Presse bereits in dichtender Anlage an dem Filterband 10 befindlich sind. Die Federn 27 sind hierbei an den beweglichen Druckplatten 9 abgestützt, so daß beim Druckhub der Vorrichtung 1 gleichzeitig der durch die Dichtleisten 21 gegen das Filterband 10 erzeugte Dichtdruck erhöht wird.

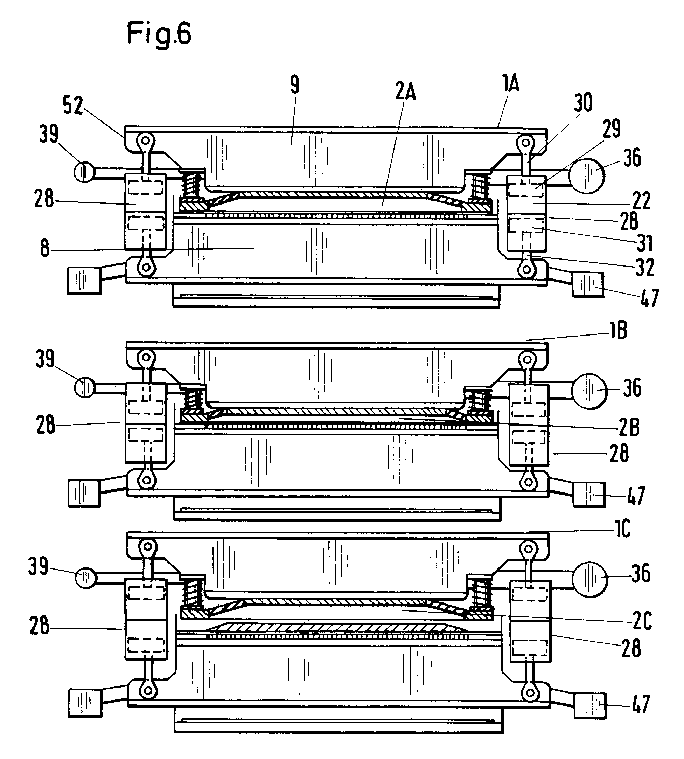

Wie in Einzelheiten in Fig. 6 dargestellt, auf welche zur Beschreibung des erfindungsgemäßen Verfahrens weiter unten noch näher bezug genommen wird, sind die stationären Druckplatten 8 mit den beweglichen Druckplatten 9 durch die hydraulischen Hochdruckerzeuger 22 zu geschlossenen Rahmen 52 verbunden und die hydraulischen Hochdruckerzeuger sind bei dem bevorzugten Ausführungsbeispiel als Doppelzylinder 28 ausgebildet.

In jedem dieser Doppelzylinder 28 ist ein Kolben 29 angeordnet, der über eine Kolbenstange 30 mit einem Ende einer beweglichen Druckplatte 9 verbunden ist. Eine gleichartige Konstruktion ist an dem gegenüberliegenden seitlichen Ende eines jeden beweglichen Druckplatte 9 vorgesehen. Der Kolben 29 in dem Doppelzylinder 28 dient als Preßkolben für den Druckhub der Kammerfilterpresse 1. In jedem der Doppelzylinder 28 ist ferner ein zweiter Kolben 31 vorgesehen, welcher über eine Kolbenstange 32 mit einem seitlichen Ende einer jeden ortsfesten Druckplatte 8 verbunden ist. Der Kolben 31 dient als Schließkolben und bewegt unabhängig vom Preßhub die bewegliche Druckplatte 9 ausreichend weit nach unten, um eine dichtende Anlage der Dichtleiste 21 an dem Filterband 10 zu gewährleisten.

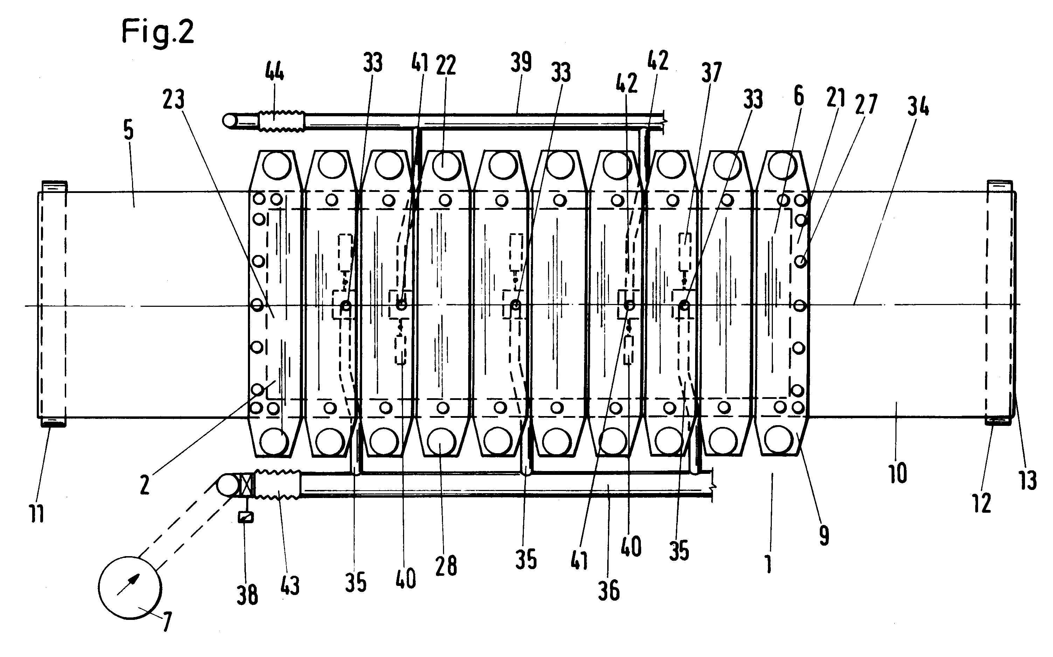

Wie insbesondere aus der Draufsicht gemäß Fig. 2 ersichtlich, weist die Schlammkammer 2 mehrere Schlammeinlässe 33 auf, welche bevorzugt in der Mittelachse 34 der Druckmembran 6 angeordnet sind. Jeder der Schlammeinlässe 33 ist über eine Verbindungsleitung 35 mit einer seitlich außerhalb der Schlammkammer 2 liegenden Sammelleitung 36 verbunden. Jeder der Schlammeinlässe 33 ist mit Schließventilen 37 versehen, welche elektrisch oder hydraulisch betätigbar sind. Die Sammelleitung 36 weist an ihrem zur Pumpe 7 führenden Ende ein ebenfalls elektrisch oder hydraulisch betätigtes Sperrventil 38 auf.

Auf der gegenüberliegenden Seite der Schlammkammer 2 ist eine Leitung 39 vorgesehen, welche in der Druckmembran 6 mehrere, über Ventile 40 gesteuerte Auslässe 41 aufweist. Die Auslässe 41 sind über Verbindungsleitungen 42 mit der Leitung 39 verbunden.

Da die Auslässe 41 und die Schlammeinlässe 33 in der Druckmembran 6 angeordnet sind, ist es zweckmäßig, die Leitung 39 und die Sammelleitung 36 an den beweglichen Druckplatten 9 zu lagern, so daß diese mit den Druckplatten entsprechend dem Hub aufwärts und abwärts bewegt werden. Die Verbindung der Sammelleitung 36 zu der Pumpe 7 und die Verbindung der Leitung 39 zu einer nicht dargestellten Zufuhr für ein Wasch- oder Reinigungsmedium erfolgt daher zweckmäßigerweise über Bälge 43, 44, welche die Vertikalbewegung der Leitungen gegenüber den entsprechenden Anschlüssen ermöglichen.

Wie ferner aus Fig. 3 und 4 ersichtlich, ist in der Schlammkammer 2 das Filterband 10 auf einer Platte 45 gelagert, welche zwischen dem Filterband 10 und den unteren Druckplatten 8 angeordnet ist. Die Platte 45 weist nach oben offene Filtratkanäle 46 auf, durch welche das Filtrat aus der Presse herausgeführt wird. Zum Sammeln des Filtrats ist eine Filtratsammelwanne 47 vorgesehen.

Da das Abfördern des Schlammkuchens 48 nach dem Preßvorgang und gegebenenfalls nach dem Waschen durch Verfahren des Filterbandes 10 erfolgt,wobei gleichzeitig ein frischer Filterbandabschnitt in die Schlammkammer eingefahren wird, ist es bevorzugt, die Platte 45 aus einem reibungsarmen Kunststoff herzustellen.

Die bisher beschriebene Vorrichtung wird wie folgt betrieben:
Es wird hierbei vorausgesetzt, daß die Vorrichtung zunächst leer ist, d.h. daß ein frischer Abschnitt des Filterbandes 10 in der Schlammkammer 2 befindlich ist. Dann werden zunächst die Schließkolben 31 betätigt, so daß unter dem Druck der Federn 27 die Dichtleiste 21 die Schlammkammer 2 allseitig abschließt, so daß diese zwischen dem Filterband 10 und der Druckmembran 6 ausgebildet ist. Anschließend erfolgt die Einspeisung des zu entwässernden Schlamms mittels der Pumpe 7 über die Sammelleitung 36 durch die Schlammeinlässe 33, wobei der Schlamm an mehreren Stellen in die Schlammkammer 2 eingespeist wird. Dieser Vorgang wird beispielsweise bis zu einem hydrostatisch durch die Pumpe 7 erzeugten Druck von 5 Bar fortgesetzt, bis in der Schlammkammer aufgrund der hierdurch erfolgenden Entwässerung ein preßfähiger Kuchen vorliegt. Nach Erreichen dieses festlegbaren hydrostatischen Drucks werden die Schließventile 37 und das Sperrventil 38 geschlossen, so daß die Schlammkammer 2 gegenüber der Pumpe 7 abgeschlossen ist. Anschließend werden die Kolben 29 mit hydraulischem Druck beaufschlagt und je nach zu entwässernder Substanz innerhalb der Schlammkammer 2 ein Druck durch Zustellen der beweglichen Druckplatten 9 ein Richtung der ortsfesten Druckplatten 8 erzeugt, welcher aufgrund der Konstruktion jede gewünschte sinnvolle Höhe haben kann und auch entsprechend den Eigenschaften der zu entwässernden Substanzen ohne wesentlichen Aufwand über gewünschte Zeiten stehen bleiben kann.

Nach Erreichen des gewünschten Entwässerungsgrades kann dann entweder die Vorrichtung 1 vollständig geöffnet und der Schlammkuchen 48 durch Betätigung des Antriebs des Filterbandes 10 aus der Schlammkammer 2 herausgefahren und am Abwurf 13 entfernt werden, oder es kann - wie dies beispielsweise in Fig. 4 veranschaulicht ist - der Schlammkuchen 48 im Anschluß an den Preßvorgang noch gewaschen und getrocknet werden.

In diesem Falle werden die Preßkolben 29 entlastet und die Druckmembran 6 durch Bewegung der beweglichen Druckplatten 9 nach oben von dem Schlammkuchen abgehoben, wobei der dichtende Eingriff der rundumlaufenden Dichtleiste 21 mit dem Filterband 10 aufrechterhalten bleibt. Anschließend wird über die Leitung 39 ein Wasch- oder Reinigungsmedium durch Öffnen der Ventile 40 in die Schlammkammer 2 eingelassen und der Schlammkuchen 48 gegebenenfalls erneut durch Betätigung der Preßkolben 29 ausgepreßt. Daran kann sich gegebenenfalls noch ein Trocknungsvorgang durch Einleiten von Preßluft od. dgl. durch die Leitung 39 anschließen.

Im folgenden wird auf die Ausführungsformen gemäß Fig. 5 bis 7 bezug genommen.

Wie gezeigt, sind bei dieser besonders bevorzugten Ausführungsform nach der Erfindung mehrere - beim Ausführungsbeispiel drei Stück - Vorrichtungen 1 A, B, C, parallel zueinander vorgesehen, welche gleichzeitig, jedoch im Takt alternierend zueinander betrieben werden.

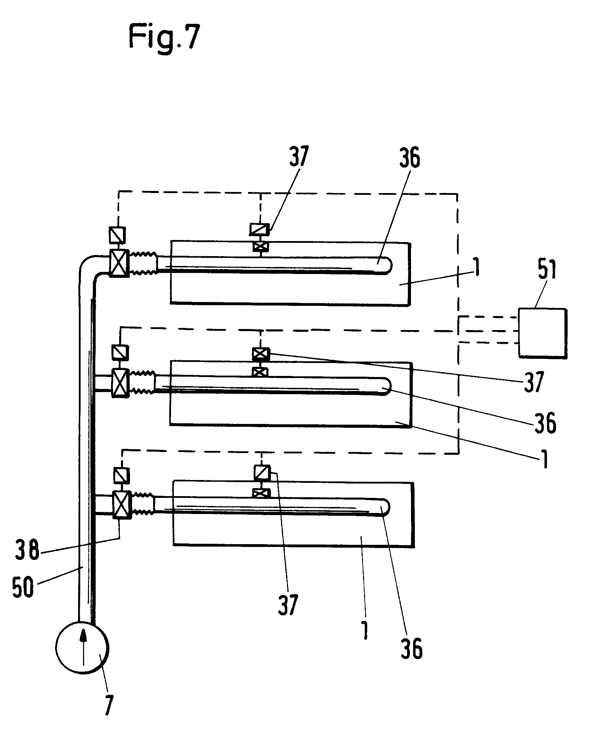

Wie in Fig. 7 stark schematisch gezeigt, sind die Vorrichtungen 1A bis 1C mit ihren Sammelleitungen 36 an eine Hauptleitung 50 angeschlossen, welche kontinuierlich mit dem Druck der Pumpe 7 beaufschlagt ist. Eine Steuerung 51 ist vorgesehen, welche die Sperrventile 38, die Schließventile 37, die Hochdruckerzeuger 22 und den Antrieb des Filterbandes 10 entsprechend dem Arbeitstakt der einzelnen Vorrichtungen 1A bis 1C derart steuert, daß die Schlammzufuhr und der Austrag des Schlammkuchens 48 quasi kontinuierlich, jedoch aus verschiedenen Schlammkammern erfolgt.

Die Fig. 5 und 6 stellen praktisch eine Momentaufnahme dieses Vorgangs dar. Hierbei wird die Schlammkammer 2A gerade mit Schlamm gefüllt und der hydrostatische Druck in der Schlammkammer 2A aufgebaut, wobei die Schließventile 37 und das Sperrventil 38 geöffnet sind. Gleichzeitig führt die Vorrichtung 1B ihren Preßhub durch Betätigung der Hochdruckerzeuger 22 aus, wobei die Schließventile 37 und das Sperrventil 38 geschlossen sind. Weiterhin gleichzeitig ist die Vorrichtung 1C geöffnet und der Schlammkuchen 48 wird durch Verfahren des Filterbandes 10 herausgefördert, wobei die Schließventile 37 und das Sperrventil 38 weiterhin geschlossen sind. Zu diesem Zeitpunkt sind daher lediglich die Schließventile 37 und das Sperrventil 38 der Vorrichtung 1A geöffnet und es wird diese durch die kontinuierlich laufende Pumpe 7 mit hydrostatischem Druck beaufschlagt. Wenn dieser Druck in der Vorrichtung 1A die festgelegte Höhe erreicht bat, werden die Ventile 37 und 38 geschlossen und die Vorrichtung 1A beginnt mit dem Druckhub durch Betätigung der Kolben 22. Gleichzeitig öffnet die Vorrichtung 1B zum Austrag des Schlammkuchens 48, während weiterhin bei der nunmehr leeren Vorrichtung 1C nach erneutem Schließen durch Betätigung der Schließkolben 31 das erneute Befüllen beginnen kann, indem die Ventile 37 und 39 geöffnet werden, so daß der in der Hauptleitung 50 kontinuierlich anstehende Druck in der Vorrichtung 1C beginnt wirksam zu werden.

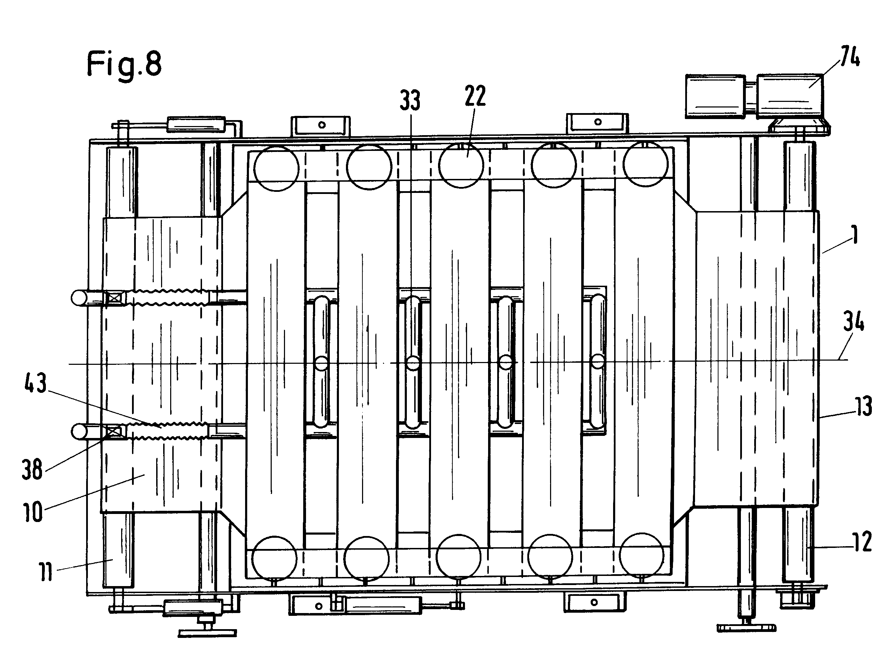

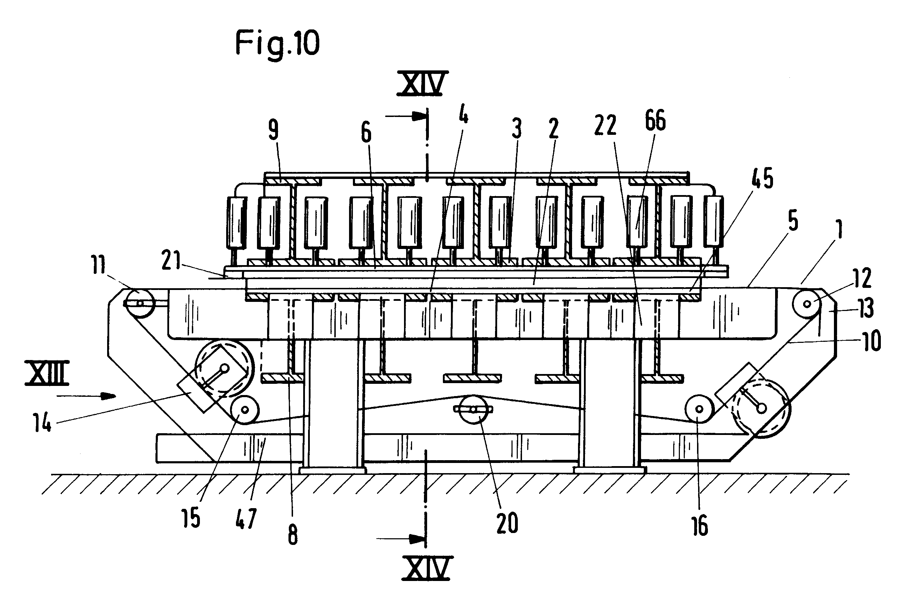

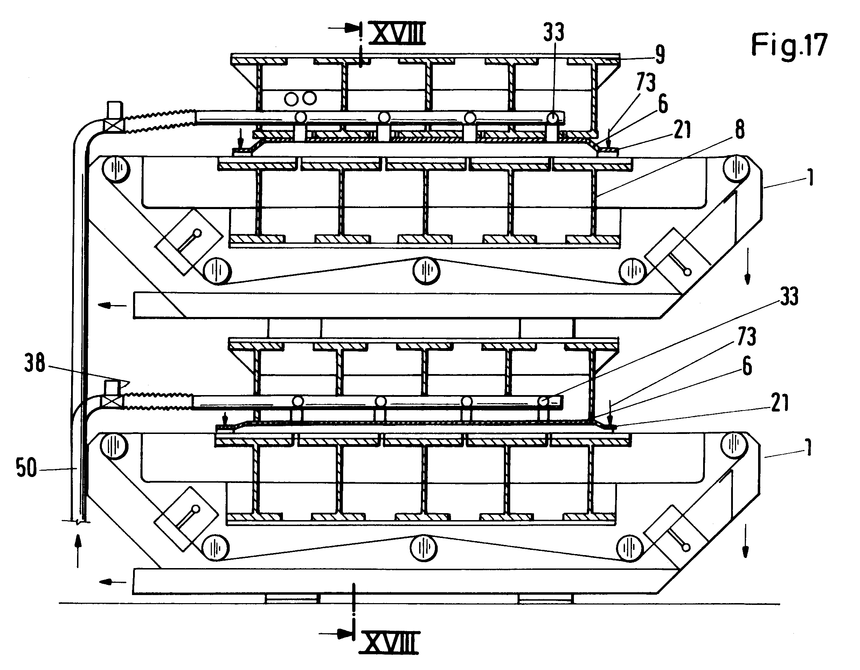

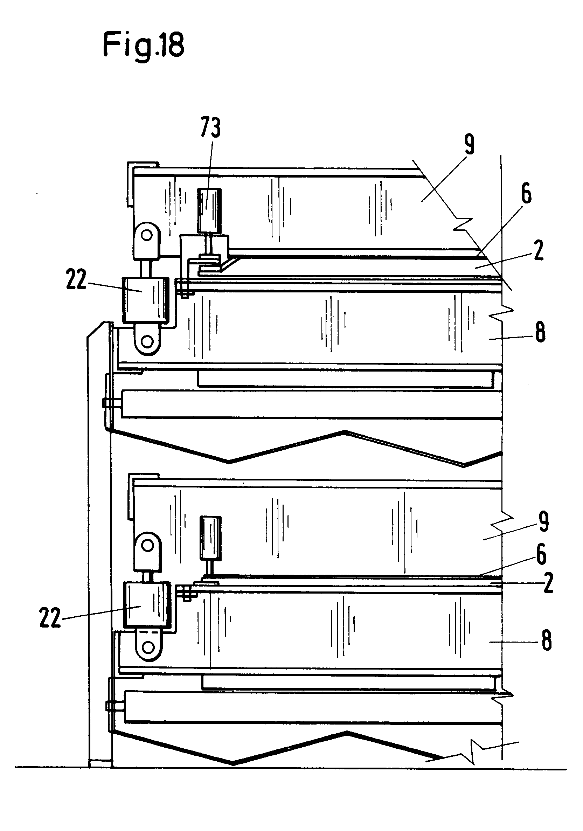

Im folgenden wird unter Bezugnahme auf die Fig. 8 bis 16 und 19 sowie weiter unten unter Bezugnahme auf die Fig. 17 und 18 eine besonders bevorzugte Ausführungsform der Vorrichtung 1 beschrieben. Die in diesen Zeichnungsfiguren veranschaulichte Ausführungsform ist hinsichtlich der wesentlichen Bauteile und des grundsätzlichen Betriebs identisch der unter Bezugnahme auf die Fig. 1 bis 7 beschriebenen Ausführungsform, so daß aufgrund der Verwendung gleicher Bezugszeichen für gleiche bzw. gleichwirkende Teile hinsichtlich dieser Einzelheiten auf die oben stehende Beschreibung verwiesen werden kann.

Abweichend zu der zuvor beschriebenen Ausführungsform ist bei der in den Fig. 8 bis 19 beschriebenen Ausführungsform einerseits die Art der Abdichtung der Druckmembran 6 gegenüber der Filterfläche 5 und andererseits die besondere Ausgestaltung der Führung im Randbereich der Schlammkammer 2. Diese weiter unten näher erläuterte Führung kann selbstverständlich auch bei der Ausführungsform gemäß den Fig. 1 bis 7 verwendet werden.

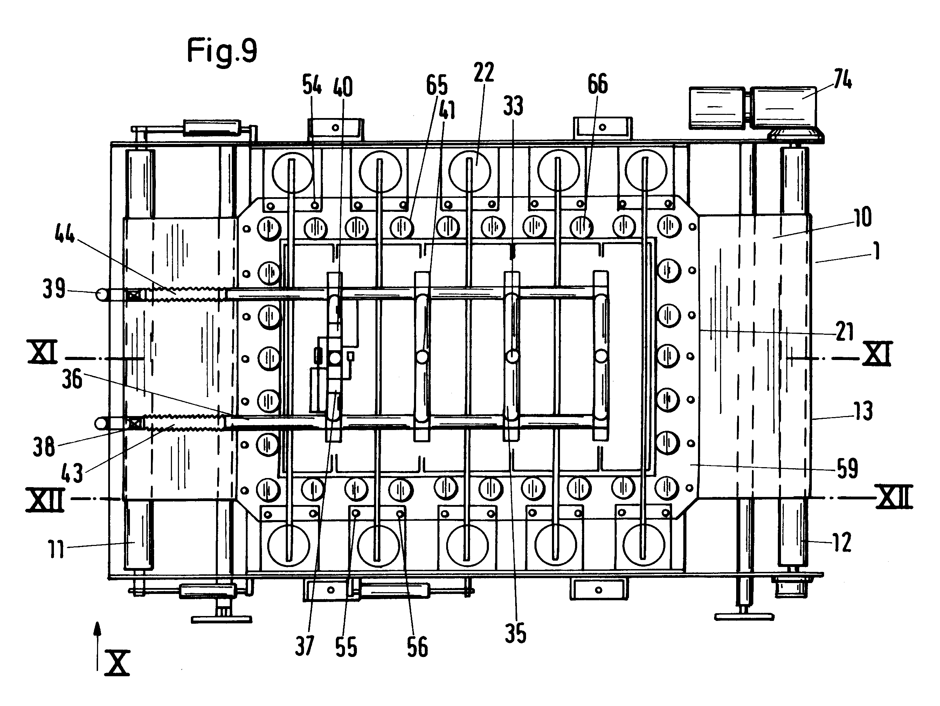

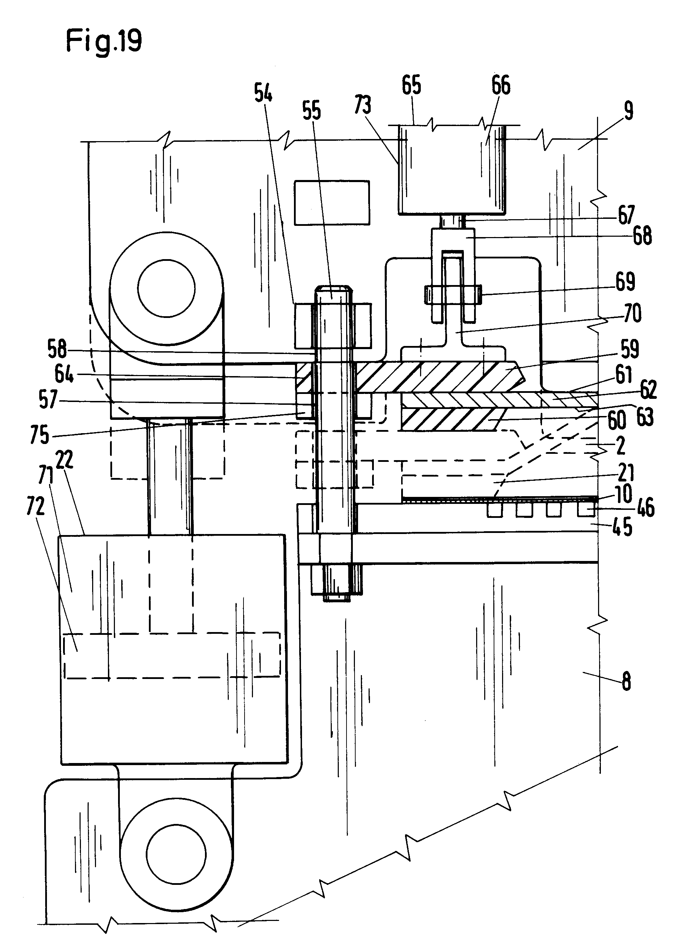

Hinsichtlich der Ausgestaltung der Führung an den Rändern der Schlammkammer 2 wird zunächst auf die Fig. 9 und 19 bezug genommen.

Wie gezeigt, sind bei diesem Ausführungsbeispiel für die beweglichen Druckplatten 9 und die Dichtleisten 21 allgemein mit 54 bezeichnete Führungen vorgesehen, welche die Vertikalbewegung der als Gummidecke 26 ausgebildeten Druckmembran 6 und die Vertikalbewegung der beweglichen Druckplatten 9 führen.

Die Führungen 54 für die beweglichen Druckplatten 9 und die Dichtleisten 21 sind, da die Bewegung der Druckplatten 9 und der Dichtleisten 21 in gleicher Richtung erfolgt, als gemeinsame Führungen ausgebildet.

Die Führungen 54 bestehen aus aufrecht stehenden Zapfen 55 und 56, welche je paarweise an jedem Ende einer der Druckplatten 8 oder 9 befestigt sind und welche in Führungsbohrungen 57 der Dichtleisten 21 und Führungsbohrungen 58 in der jeweils anderen Druckplatte 8 oder 9 gleiten. Beim Ausführungsbeispiel sind die Zapfen 55 und 56 an den unteren feststehenden Druckplatten befestigt und die Führungsbohrungen 58 sind in den oberen beweglichen Druckplatten 9 ausgebildet.

Wie aus Fig. 9 ersichtlich, ist in gleichen regelmäßigen Abständen an den beiden Stirnseiten der Schlammkammer 2 ebenfalls eine Anzahl von Führungen 54 vorgesehen, welche gleichfalls aus den Paaren von Zapfen 55 und 56 bestehen.

Da die Druckmembran 6 bevorzugt als Gummidecke 26 ausgebildet ist, sind zur Verbesserung der Führung in vertikaler Richtung die Dichtleisten 21 derart ausgebildet, daß eine derartige Gleitführung möglich ist.

Zu diesem Zweck bestehen die Dichtleisten 21 aus einer starren Versteifungsleiste 59 aus Kunststoff od. dgl., wobei die Versteifungsleiste 59 entweder als die Druckmembran 6 umgebender Rahmen ausgebildet sein kann oder aus mehreren Einzelteilen bestehen kann.

Ferner bestehen die Dichtleisten 21 aus einem um den Umfang der Druckmembran 6 umlaufenden Dichtkörper 60 aus einem flexiblen Material, wobei die Versteifungsleiste 59 auf der Oberseite 61 des Randbereichs 2 der Druckmembran 6 und der Dichtkörper 60 der Versteifungsleiste 59 gegenüberliegend auf der Unterseite 63 des Randbereichs 62 der Druckmembran 6 befestigt ist.

Wie aus Fig. 19 ersichtlich, ist die Versteifungsleiste 59 auf der Oberseite der die Druckmembran 6 bildenden Gummidecke 26 angeklebt oder angeschweißt, während der Dichtkörper 60 durch die gegenüberliegende Versteifungsleiste 59 abgestützt auf der gegenüberliegenden, d.h. der Filterfläche 5 zugekehrten Seite der Gummidecke 26 angeschweißt oder angeklebt ist.

Wie aus Fig. 19 ersichtlich, ist die Dichtleiste 21 mit einem über den Umfang der Druckmembran 6 vorstehenden Rand 64 ausgebildet, in welchem die Führungsbohrungen 57 angeordnet sind. Im Bereich der Führungsbohrungen 57 ist auf der Unterseite des vorstehenden Randes 64 jeweils noch eine Verstärkung 75 vorgesehen, so daß bei der weiter unten näher beschriebenen Aufwärts- und Abwärtsbewegung des Randbereiches 62 der Druckmembran 6 die Führung auf den Zapfen 55, 56 nach Art einer auf diesen gleitenden Kunststoffbuchse erfolgt, welche aus dem Material der Versteifungsleiste 59 und der Verstärkung 75 besteht.

Das weitere wesentliche und von der Ausführungsform gemäß Fig. 1 bis 7 abweichende Merkmal der unter Bezugnahme auf die Fig. 8 bis 19 beschriebenen Ausführungsform, nämlich der gesonderte Antrieb 73 für die Dichtleisten 21, wird unter besonderer Bezugnahme auf die Fig. 9 bis 16 und 19 näher beschrieben.

Wie gezeigt, ist bei dieser besonders bevorzugten Ausführungsform für die Dichtleisten 21 ein gesonderter, allgemein mit 73 bezeichneter Antrieb vorgesehen, durch welchen die Dichtleisten 21 positiv gesteuert auf und ab bewegbar sind.

Der Antrieb 73 ist durch eine Anzahl von an den Dichtleisten 21 angeordneten und steuerbaren Druckerzeugern 65 gebildet, welche, wie insbesondere Fig. 9 zeigt, in regelmäßigen Abständen um den Umfang der Druckmembran 6 oberhalb der Dichtleisten 21 verteilt sind. Die Druckerzeuger 65 ermöglichen es, daß die Dichtleisten 21 gegenüber der oberen Druckplatte 9, d.h. unabhängig von deren Bewegung in Richtung des Filterbandes 10 gedrückt und von diesem abgehoben werden können.

Bei dem bevorzugten Ausführungsbeispiel sind die Druckerzeuger 65 als Pneumatikzylinder 66 ausgebildet, welche zum Öffnen und zum Schließen der Schlammkammer 2 durch Anheben und Absenken der Dichtleisten 21 betätigbar sind.

Die Pneumatikzylinder sind an den oberen Druckplatten 9 abgestützt und bewegen sich mit diesen gemeinsam. Die Anordnung ist hierbei derart getroffen, daß durch Kompression der in den einzelnen Pneumatikzylindern 66 nach Absenken der Dichtleisten 21 auf das Filterband 10 verbliebenen Luft beim Druckhub der oberen Druckplatten 9 der Dichtdruck erhöht wird. Folglich wird beim Ansteigen des Drucks in der Schlammkammer 2 gleichzeitig der Druck erhöht, mit welchem diese abgedichtet wird.

Wie gezeigt, sind an jedem Ende einer oberen Druckplatte 9 zwei Pneumatikzylinder 66 vorgesehen, wobei an den beiden Druckplatten 9, welche die Stirnseiten der Schlammkammer 2 bilden, eine entsprechende Anzahl von Pneumatikzylindern 66 in regelmäßigen Abständen über deren Länge verteilt vorgesehen ist.

Wie insbesondere aus Fig. 19 ersichtlich, sind die Kolbenstangen 67 der Pneumatikzylinder 66 gelenkig mit der Versteifungsleiste 59 der Dichtleiste verbunden, indem am freien Ende der Kolbenstange 67 jedes Pneumatikzylinders 66 eine Gabel 68 angeordnet ist, welche über einen Gelenkstift 69 und entsprechende Bohrungen den aufrecht stehenden Schenkel eines T-Stücks 70 aufnimmt, welches auf der Oberseite der Verstärkungsleiste 59 befestigt ist. Die Anordnung ist hierbei derart getroffen, daß die Kolbenstange 67 mit der Mittellinie des Dichtkörpers 60 übereinstimmt, so daß eine optimale Druckverteilung beim Zusammenpressen des Dichtkörpers 60 erzielt wird.

Aufgrund dieser Anordnung läßt sich daher die Dichtleiste 21 unabhängig von der oberen Druckplatte 9 aufwärts und abwärts bewegen, wobei in Fig. 19 in gestrichelten Linien die abgesenkte Stellung veranschaulicht ist, in welcher die Schlammkammer 2 abgedichtet ist. Aufgrund dieser Anordnung wird einerseits gegenüber dem ersten Ausführungsbeispiel erreicht, daß die hydraulischen Druckerzeuger lediglich nur noch die halbe Hubhöhe ausführen müssen, da, wie aus Fig. 19 ersichtlich, die Gummidecke 26 der Druckmembran 6 über die Pneumatikzylinder 66 in eine völlig gerade gestreckte Lage bewegt werden kann. Ferner wird gegenüber dem ersten Ausführungsbeispiel erreicht, daß ein gesonderter Schließzylinder im Rahmen der hydraulischen Hochdruckerzeuger 22 nicht erforderlich ist, so daß die hydraulischen Hochdruckerzeuger, wie in Fig. 19 veranschaulicht, als Einfachzylinder 71 ausgebildet werden können, die lediglich einen aufwärts und abwärts beweglichen Preßkolben 72 enthalten.

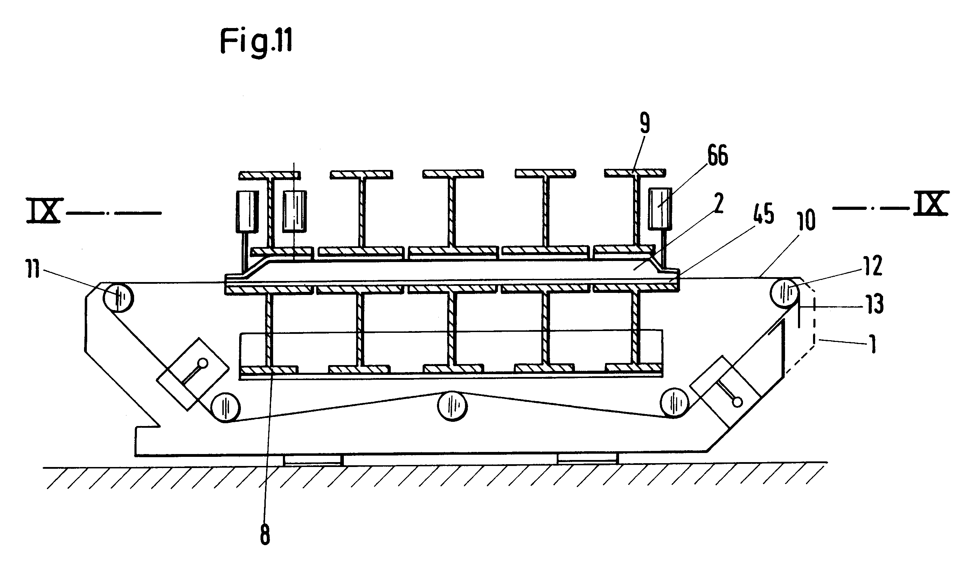

Unter Bezugnahme auf die Fig. 11, 12 und 14 bis 16 wird der Betrieb dieser Ausführungsform kurz beschrieben.

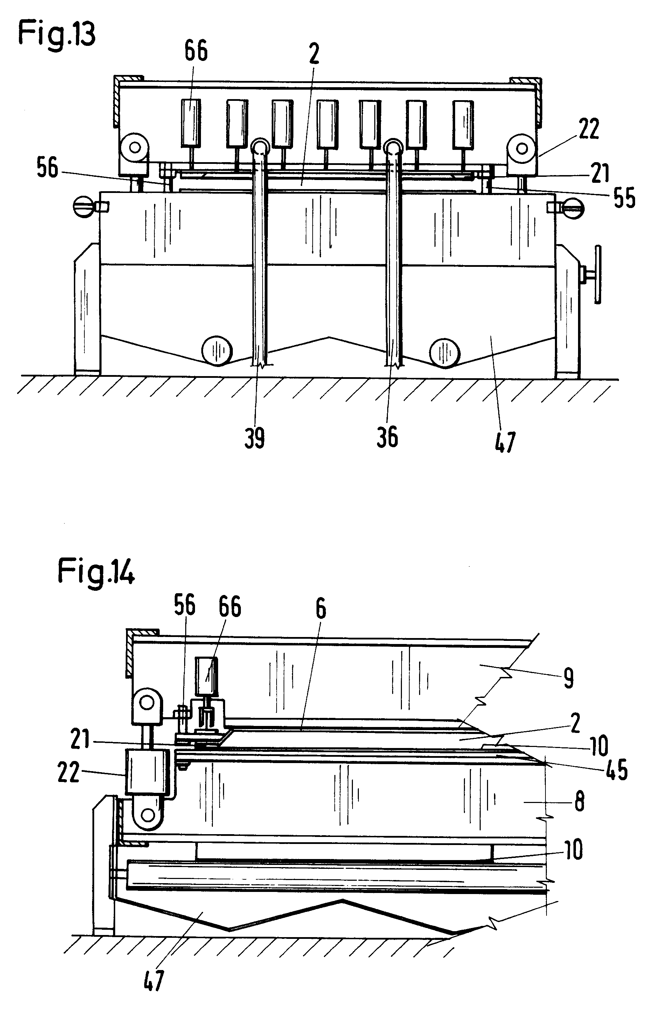

Es wird dabei wiederum davon ausgegangen, daß die Schlammkammer 2 leer ist, d.h., daß ein frischer Abschnitt des Filterbandes 10 in die Schlammkammer eingefahren wurde. Nachdem dies der Fall ist, werden zunächst die Pneumatikzylinder 66 mit Druckluft beaufschlagt, so daß die Dichtleisten 21 in dichtenden Eingriff mit dem Filterband 10 gebracht werden und die Schlammkammer 2 allseitig dicht verschlossen ist. Anschließend erfolgt die Einspeisung des zu entwässernden Schlamms mittels der Pumpe 7 über die Sammelleitung 36 durch die Schlammeinlässe 33, wobei der Schlamm zur besseren Verteilung durch die vier in Fig. 9 gezeigten Schlammeinlässe 33 eingespeist wird. Wie beim ersten Ausführungsbeispiel wird dieser Vorgang beispielsweise bis zu einem hydrostatisch durch die Pumpe 7 erzeugten Druck von 7 Bar fortgesetzt, worauf durch die hierdurch erfolgende Entwässerung ein preßfähiger Schlammkuchen 48 erzeugt wurde. Der Zustand der Einspeisung und die Erzeugung des hydrostatischen Drucks ist in den Fig. 11 und 14 veranschaulicht.

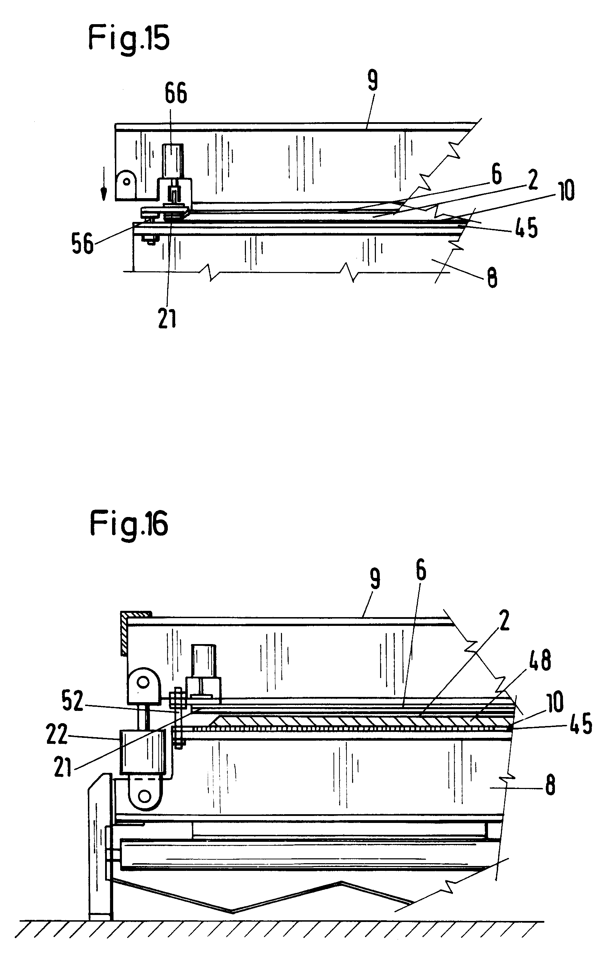

Nachdem dieser festlegbare hydrostatische Druck erreicht wurde, werden die Schließventile 37 und das Sperrventil 38 geschlossen, so daß die Schlammkammer 2 gegenüber der Pumpe 7 getrennt ist. Danach werden die Preßkolben 72 für eine Abwärtsbewegung mit hydraulischem Druck beaufschlagt und durch Bewegung der beweglichen Druckplatten 9 in Richtung der ortsfesten Druckplatten 8 ein mechanischer Druck auf den in der Schlammkammer 2 befindlichen Schlammkuchen 49 ausgeübt, welcher, wie beim ersten Ausführungsbeispiel, jede gewünschte sinnvolle Höhe haben kann und entsprechend den Eigenschaften der zu entwässernden Substanzen ohne wesentlichen Aufwand über gewünschte Zeiten stehen bleiben kann. Dieser Zustand ist in Fig. 15 der Zeichnungen veranschaulicht, wobei lediglich ein Ausschnitt des Randbereiches der Schlammkammer 2 mit den die Schlammkammer 2 über die Dichtleisten 21 schließenden Pneumatikzylindern 66 gezeigt ist.

Bei der Abwärtsbewegung der beweglichen Druckplatten 9 in Richtung der ortsfesten Druckplatten 8 wird die in den Pneumatikzylindern 66 befindliche Luft komprimiert, da entsprechend der Abwärtsbewegung der beweglichen Druckplatten 9 die Kolbenstangen 67 der Pneumatikzylinder 66 in die Zylinder hineinbewegt werden. Hierdurch wird der durch die Dichtleisten 21 ausgeübte Dichtdruck erheblich erhöht.

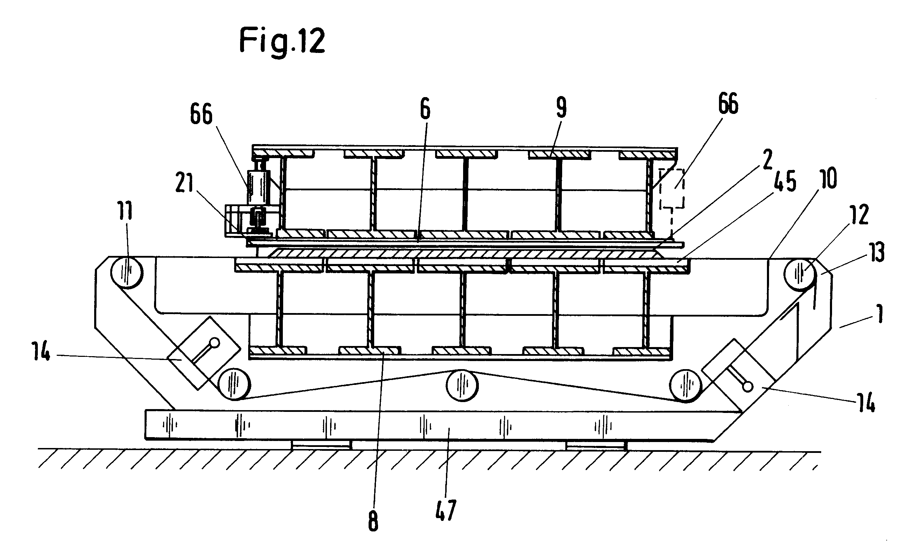

Nach Erreichen des gewünschten Entwässerungsgrades werden zunächst die Preßkolben 72 entlastet und gleichzeitig die Pneumatikzylinder 66 eingefahren, so daß die Druckmembran eine ebene Gestalt einnimmt, wie dies in Fig. 16 veranschaulicht ist. Hierdurch kann bei geringem Öffnen des Spaltes zwischen den Druckplattenpaaren 8 und 9 nun der Austrag des Schlammkuchens 48 beginnen kann. Dieser Zustand ist in Fig. 12 und Fig. 16 veranschaulicht.

Sollte es erforderlich sein, den Schlammkuchen nochmals zu waschen, so wird anstelle des gleichzeitigen Einfahrens der Pneumatikzylinder 66 zunächst lediglich der Druck der Preßkolben 72 entlastet und diese durch entsprechende Umsteuerung in die geöffnete Stellung verfahren. Anschließend kann dann über die Leitung 39 ein Wasch- oder Reinigungsmedium durch Öffnen der Ventile 40 in die Schlammkammer 2 eingelassen und der Schlammkuchen 48 gegebenenfalls erneut durch Betätigung der Preßkolben 72 ausgepreßt werden.

In jedem Fall wird nach vollständig geöffneter Schlammkammer 2, wie sie in den Fig. 12 und 16 veranschaulicht ist, das Filterband über seinen Antrieb 74 verfahren, so daß der Schlammkuchen 48 aus der Schlammkammer 2 herausgefahren und an dem Abwurf 13 abgefördert wird. Gleichzeitig wird hierbei ein frischer Abschnitt des Filterbandes 10 in die Schlammkammer 2 eingefahren, so daß der Vorgang wiederholt werden kann.

In den Fig. 17 und 18 ist noch eine Ausführungsform nach der Erfindung gezeigt, wie sie für Versuchszwecke gebaut werden soll. Wie gezeigt, besteht diese Ausführungsform entsprechend der Ausführungsform gemäß den Fig. 5 bis 7 aus zwei übereinander angeordneten Vorrichtungen 1, welche in gleicher Weise, wie die zuvor beschriebene Ausführungsform, taktweise betrieben werden kann, so daß eine nahezu kontinuierliche Arbeitsweise möglich wird. Bevorzugt ist hierbei ebenfalls eine Steuerung zu verwenden, welche die taktweise Betriebsweise der Sperrventile 38, der Schließventile 37, der Hochdruckerzeuger 22, der Pneumatikzylinder 66 und des Antriebs 74 des Filterbandes 10 entsprechend dem Arbeitstakt der beiden Vorrichtungen steuert.

Es ist offensichtlich, daß bei kontinuierlich laufender Druckpumpe das Einspeisen und Austragen kontinuierlich, jedoch in verschiedenen Ebenen erfolgt.

Es ist ferner offensichtlich, daß die erfindungsgemäße Vorrichtung entweder als Einzeleinheit diskontinuierlich oder in der beschriebenen Weise kontinuierlich arbeitend betrieben werden kann.

## Patentansprüche

1. Verfahren zum Entwässern von Schlamm und ähnlichen Substanzen, bei dem der Schlamm durch eine Pumpe unter Druck in mindestens eine Filterflächen aufweisende geschlossene Schlammkammer eingespeist und in der Schlammkammer ein die Entwässerung herbeiführender hydrostatischer Druck aufgebaut wird, wobei nach Erreichen eines festlegbaren Druckniveaus die Schlammkammer gegenüber der Pumpe getrennt und das Volumen der Schlammkammer anschließend verkleinert wird und ein mechanischer Entwässerungsdruck erzeugt wird, welcher größer ist als der erreichte hydrostatische Druck und wobei zum Abfördern des hergestellten Filterkuchens die Filterfläche mit dem Filterkuchen aus der Schlammkammer herausbewegt wird, **dadurch gekennzeichnet**, daß mehrere Schlammkammern alternierend taktweise betrieben werden, während die den hydrostatischen Druck erzeugende Pumpe kontinuierlich angetrieben wird, daß mindestens jeweils eine Schlammkammer bis zum Erreichen des festlegbaren Druckniveaus von der Pumpe gespeist wird, daß dann die Einspeisung durch die Pumpe auf jeweils mindestens eine zweite der Schlammkammern umgeschaltet wird, daß während des Aufbaus des hydrostatischen Entwässerungsdruckes in der zweiten Schlammkammer die zusätzliche mechanische Entwässerung in der ersten Schlammkammer durchgeführt wird, daß bei Erreichen des festlegbaren Druckniveaus des hydrostatischen Drucks in der zweiten Schlammkammer die Einspeisung durch die Pumpe auf mindestens eine dritte der Schlammkammern umgeschaltet wird, daß während des Aufbaus des hydrostatischen Entwässerungsdrucks in der dritten Schlammkammer die zusätzliche mechanische Entwässerung in der zweiten Schlammkammer durchgeführt wird und gleichzeitig der Filterkuchen aus der ersten der Schlammkammern ausgetragen wird, derart, daß die Schlammzufuhr und der Austrag des Filterkuchens quasi kontinuierlich, jedoch aus verschiedenen Schlammkammern erfolgt.

2. Verfahren nach Anspruch 1, **dadurch gekennzeichnet**, daß der Schlamm in jede der Schlammkammern an mehreren Punkten gleichzeitig eingepumpt wird.

3. Vorrichtung zum Durchführen des Verfahrens nach einem der Ansprüche 1 oder 2, mit einer allseitig geschlossenen Schlammkammer (2), welche Filterflächen (5) und einen Schlammeinlaß (33) aufweist, der über eine Leitung mit einer den Filtrationsdruck erzeugenden Pumpe (7) verbunden ist, wobei die Filterflächen (5) in der Schlammkammer (2) zwischen stationären und beweglichen Druckplatten angeordnet sind und nach Abschalten der Pumpe mechanisch mit Druck beaufschlagbar sind, und wobei die Schlammkammer einen die beweglichen Druckplatten (9) enthaltenden Deckel (3) und einen die ortsfesten Druckplatten (8) enthaltenden Boden (4) aufweist, **dadurch gekennzeichnet**, daß mindestens drei Schlammkammern (2) parallel zueinander angeordnet sind, daß die Schlammeinlässe (33) der Schlammkammern (2) über Schließventile (37) an eine Sammelleitung (36) angeschlossen sind, daß die Sammelleitungen (36) Sperrventile (38) aufweisen, daß die Sammelleitungen (36) der Schlammkammern (2) an eine Hauptleitung (50) angeschlossen sind, daß die Hauptleitung (50) kontinuierlich mit dem Druck der Pumpe (7) beaufschlagt ist, und daß eine Steuerung (51) vorgesehen ist, welche die Sperrventile (38), die Schließventile (37), die Hochdruckerzeuger (22) und den Antrieb der Filterflächen (5) entsprechend dem Arbeitstakt der einzelnen Schlammkammern (2) derart steuert, daß die Schlammzufuhr und der Austrag des Filterkuchens quasi kontinuierlich, jedoch aus verschiedenen Schlammkammern (2) erfolgt.

4. Vorrichtung nach Anspruch 3, **dadurch gekennzeichnet**, daß die Schlammkammer (2) aus den Filterflächen (5) in Form eines horizontal und geradlinig intermittierend umlaufenden Filterbandes (10) und einer Druckmembran (6) besteht, daß die Druckmembran (6) mit umlaufenden Dichtleisten (21) versehen ist, welche in der geschlossenen Stellung dichtend an dem Filterband (10) anliegen, und daß für die beweglichen Druckplatten (9) und die Dichtleisten (21) Führungen (54) für die Vertikalbewegung vorgesehen sind.

5. Vorrichtung nach Anspruch 3 oder 4, **dadurch gekennzeichnet**, daß der Deckel (3) mittels der beweglichen Druckplatten (9) gegenüber dem Boden (4) zwischen einer geschlossenen und einer geöffneten Stellung bewegbar ist.

6. Vorrichtung nach Anspruch 4 oder 5, **dadurch gekennzeichnet**, daß die Führungen (54) für die beweglichen Druckplatten (9) und die Dichtleisten (21) als gemeinsame Führungen ausgebildet sind, indem die Führungen (54) als aufrecht stehende Zapfen (55, 56) an einer der Druckplatten (8 oder 9) eines Druckplattenpaares ausgebildet sind, welche in Führungsbohrungen (57, 58) der Dichtleisten (21) und der jeweils anderen Druckplatte (9 oder 8) gleiten.

7. Vorrichtung nach Anspruch 6, **dadurch gekennzeichnet**, daß die Dichtleisten (21) aus einer starren Versteifungsleiste (59) und einen um den Umfang der Druckmembran (6) umlaufenden Dichtkörper (60) aus flexiblem Material bestehen, daß die Versteifungsleiste (59) auf der Oberseite (61) des Randbereiches (62) der Druckmembran (6) und der Dichtkörper (60) der Versteifungsleiste (59) gegenüberliegend auf der Unterseite (63) des Randbereichs (62) befestigt ist, daß die Dichtleiste (21) einen über den Umfang der Druckmembran (6) vorstehenden Rand (64) aufweist, und daß die Führungsbohrungen (57) in dem Rand (64) ausgebildet sind.

8. Vorrichtung nach einem der Ansprüche 3 bis 7, **dadurch gekennzeichnet**, daß eine Vielzahl von Druckplattenpaaren (8, 9) nebeneinanderliegend angeordnet ist, daß die unteren Druckplatten (8) starr gelagert sind, und daß die oberen Druckplatten (9) über hydraulische Hochdruckerzeuger (22) gegen die unteren Druckplatten (8) zustellbar sind oder umgekehrt.

9. Vorrichtung nach einem der vorstehenden Ansprüche 4 bis 8, **dadurch gekennzeichnet**, daß die Druckmembran (6) mindestens in einem Mittelbereich (23) mit den beweglichen Druckplatten (9) verbunden ist, daß an der Berührungsfläche (24) der Dichtleisten (21) mit dem Filterband (10) auswechselbare Verschleißteile (25) angeordnet sind, und daß die Druckmembran (6) als mit den Dichtleisten (21) verbundene Gummidecke (26) ausgebildet ist.

10. Vorrichtung nach einem der Ansprüche 4 bis 9, **dadurch gekennzeichnet**, daß die Dichtleisten (21) positiv gesteuert durch einen Antrieb (73) auf- und abbewegbar sind, und daß der Antrieb (73) durch eine Anzahl von an den Dichtleisten (21) angeordneten steuerbaren Druckerzeugern (65) gebildet ist, welche die Dichtleisten (21) gegenüber der oberen Druckplatte (9) wahlweise in Richtung des Filterbandes (10) drücken und von diesem abheben.

11. Vorrichtung nach Anspruch 10, **dadurch gekennzeichnet**, daß die Druckerzeuger (65) als Pneumatikzylinder (66) ausgebildet sind, welche zum Öffnen und Schließen der Schlammkammer (2) durch Heben und Senken der Dichtleisten (21) betätigbar sind, daß die Pneumatikzylinder an den oberen Druckplatten (9) abgestützt sind, derart, daß durch Kompression der in den Pneumatikzylindern (66) befindlichen Luft beim Druckhub der oberen Druckplatten (9) der Dichtdruck erhöht wird, daß an jedem Ende einer oberen Druckplatte (9) zwei Pneumatikzylinder (66) angeordnet sind, und daß an den an den Stirnseiten der Schlammkammer (2) angeordneten Druckplatten (9) eine Anzahl von Pneumatikzylindern (66) über deren Länge verteilt angeordnet ist.

12. Vorrichtung nach Anspruch 11, **dadurch gekennzeichnet**, daß die Kolbenstangen (67) der Pneumatikzylinder (66) gelenkig mit der Versteifungsleiste (59) der Dichtleiste (21) verbunden sind, und daß die Verbindung der Kolbenstangen (67) mit der Versteifungsleiste (59) der Mittellinie des Dichtkörpers (60) gegenüberliegend angeordnet ist.

13. Vorrichtung nach einem der Ansprüche 3 und 11, **dadurch gekennzeichnet**, daß die Steuerung (51) die Pneumatikzylinder (66) entsprechend dem Arbeitstakt der einzelnen Schlammkammern (2) steuert.

14. Vorrichtung nach einem der Ansprüche 10 bis 13, **dadurch gekennzeichnet**, daß die hydraulischen Hochdruckerzeuger (22) als Einfachzylinder (71) mit einem Preßkolben (72) ausgebildet sind.

15. Vorrichtung nach einem der Ansprüche 4 bis 14, **dadurch gekennzeichnet**, daß die Dichtleisten (21) in Richtung des Filterbandes (10) federvorgespannt sind, und daß die die Dichtleisten (21) beaufschlagenden Federn (27) an den beweglichen Druckplatten (9) abgestützt sind, derart, daß beim Druckhub gleichzeitig der Dichtdruck erhöht wird.

16. Vorrichtung nach einem der Ansprüche 3 bis 15, **dadurch gekennzeichnet**, daß die hydraulischen Hochdruckerzeuger (22) die stationären Druckplatten (8) mit den beweglichen Druckplatten (9) zu geschlossenen Rahmen (52) verbinden.

17. Vorrichtung nach Anspruch 14 oder 15, **dadurch gekennzeichnet**, daß die hydraulischen Hochdruckerzeuger (22) als zwei Kolben (29, 31) enthaltende Doppelzylinder (28) ausgebildet sind, und daß in jedem Doppelzylinder (28) der eine Kolben (29) als Preßkolben und der zweite Kolben (31) als Schließkolben ausgebildet ist.

18. Vorrichtung nach einem der Ansprüche 3 bis 17, **dadurch gekennzeichnet**, daß die Schlammkammer (2) mehrere Schlammeinlässe (33) aufweist.

19. Vorrichtung nach Anspruch 18, **dadurch gekennzeichnet**, daß die Schlammeinlässe (33) in der Mittelachse (34) der Druckmembran (6) angeordnet sind, und daß die Schlammeinlässe (33) über je eine Verbindungsleitung (35) mit der Sammelleitung (36) verbunden sind.

20. Vorrichtung nach einem der vorstehenden Ansprüche 4 bis 19, **dadurch gekennzeichnet**, daß in der Druckmembran (6) ein oder mehrere, über Ventile (40) gesteuerte Auslässe (41) einer Leitung (39) für ein Wasch- oder Reinigungsmedium ausgebildet sind.

21. Vorrichtung nach einem der Ansprüche 4 bis 20, **dadurch gekennzeichnet**, daß in der Schlammkammer (2) zwischen dem Filterband (10) und den unteren Druckplatten (8) eine Platte (45) mit nach oben offenen Filtratkanälen (46) vorgesehen ist, und daß die Platte (45) aus einem reibungsarmen Kunststoff besteht.

## Claims

1. A process for dewatering of sludges and similar substances in which the sludge is fed by a pump under pressure into at least one enclosed sludge chamber comprising filter surfaces and a hydrostatic pressure is generated in the sludge chamber to introduce the dewatering process wherein after attaining an adjustable pressure level the sludge chamber is isolated from the pump and the volume of the sludge chamber subsequently is reduced and an mechanical dewatering pressure is produced which is greater than the hydrostatic pressure attained and wherein for discharging the filter cake produced the filter surface is removed from the sludge chamber, characterised in that a plurality of sludge chambers is operated alternatedly and in cycles while the pump generating the hydrostatic pressure is continuously driven, in that at least each one sludge chamber is fed by the pump until achieving the adjustable pressure level, in that thereafter the feeding by the pump is switched to the respective at least a second of the sludge chambers, in that during producing the hydrostatic dewatering pressure in the second sludge chamber the additional mechanical dewatering in the first sludge chamber is performed, in that when achieving the adjustable pressure level of the hydrostatic pressure in the second sludge chamber the feeding by the pump is switched to at least a third one of the sludge chambers, that during producing the hydrostatic dewatering pressure in the third sludge chamber the additional mechanical dewatering in the second sludge chamber is performed and simultaneously the filter cake is removed from the first one of the sludge chambers such that the sludge feed and the discharge of the filter cake is occurring more or less continuously but from different sludge chambers.

2. A process according to claim 1, characterised in that the sludge is pumped into each of the sludge chambers at a plurality of locations simultaneously.

3. Apparatus for performing the method according to one of the claims 1 or 2, having a completely enclosed sludge chamber (2) being provided with filter surfaces (5) and having a sludge inlet (33) which is connected by a pipe to a pump (7) generating the filtration pressure wherein the filter surfaces (5) in the sludge chamber (2) are provided between stationary and movable pressure plates and can be pressurized mechanically once the pump (7) has been switched off and wherein the sludge chamber is having a cover (3) containing the movable pressure plates (9) and a base (4) containing the fixed pressure plates (8), characterised in that at least three sludge chambers (2) are provided parallel to each other, in that the sludge inlets (33) of the sludge chambers (2) via locking valves (37) are connected to a collecting pipe (36), in that the collecting pipes (36) are provided with shut-off valves (38), in that the collecting pipes (36) of the sludge chambers (2) are connected to a main pipe (50), in that the main pipe (50) is continuously pressurized by the pressure of the pump (7) and in that there is provided a control (51) which is controlling the shut-off valves (38), the locking valves (37), the high pressure generators (22) and the drive of the filter surfaces (5) in accordance with the working cycle of the individual sludge chambers (2) in such a way that the feeding of the sludge and the discharge of the filter cake is occurring more or less continuously but from different sludge chambers (2).

4. Apparatus according to claim 3, characterised in that the sludge chamber (2) is consisting of the filter surfaces (5) in form of a filter belt (10) running intermittently in a straight direction and of a pressure membrane (6), in that the pressure membrane (6) is provided with surrounding sealing lips (21) which in the closed position sealingly abut the filter belt (10) and, in that guides (54) are provided for the vertical movement of the sealing lips (21) and of the movable pressure plates (9).

5. Apparatus according to claim 3 or 4, characterised in that the cover (3) can be moved relative to the base (4) between an open and a closed position by means of the movable pressure plates (9).

6. Apparatus according to claim 4 or 5, characterised in that the guides (54) for the movable pressure plates (9) and the sealing lips (21) are in the form of common guides by providing the guides (54) in the form of vertical spigots (55, 56) on one of the pressure plates (8 or 9) of a pair of pressure plates which slide in guide bores (57) in the sealing lips (21) and the respective other pressure plate (9 or 8) as appropriate.

7. Apparatus according to claim 6, characterised in that the sealing lips (21) include a rigid reinforcement strip (59) and a sealing element (60) made of a flexible material enclosing the periphery of the pressure membrane (6), in that the reinforcement strip (59) is attached to the upper face (61) of the marginal area (62) of the pressure membrane (6) while the sealing element (60) is attached opposite to the reinforcement strip (59) on the lower side (63) of the marginal area (62) in that the sealing lip (21) comprises an edge (64) which protrudes beyond the periphery of the pressure membrane (6) and in that the guide bores (57) are formed in the edge (64).

8. Apparatus according to any of the claims 3 to 7, characterised in that a plurality of adjacent pairs of pressure plates (8, 9) is provided, in that the lower pressure plates (8) are rigidly mounted and in that the upper pressure plates (9) can be moved against the lower pressure plates (8) by means of hydraulic high pressure generators (22) or vice versa.

9. Apparatus according to any of the claims 4 to 8, characterised in that the pressure membrane (6) is connected to the movable pressure plates (9) at least in a central area (23), in that replaceable consumables (25) are fitted at the point of contact (24) between the sealing lips (21) and the filter belt (10) and in that the pressure membrane (6) is provided in the form of a rubber blanket (26) joined with to the sealing strips (21).

10. Apparatus according to any of the claims 4 to 9, characterised in that the sealing strips (21) are movable up and down with positive control by a drive (73) and in that the drive (73) is formed by a number of controllable pressure generators (65) located on the sealing lips (21), wherein the pressure generators press or raise the sealing lips (21) relative to the upper pressure plates (9) towards or from the filter belt (10).

11. Apparatus according to claim 10, characterised in that the pressure generators (65) are in the form of pneumatic cyclinders (66) which can be actuated to open and close the sludge chamber (2) by raising or lowering the sealing lips (21), in that the pneumatic cylinders are braced against the upper pressure plates (9) such that the sealing pressure is increased by compressing the air in the pneumatic cylinders (66) during the pressure stroke of the upper pressure plates (9), in that at each end of an upper pressure plate (9) there are provided two pneumatic cylinders (66) and, in that a plurality of pneumatic cylinders (66) is provided on the face ends of the sludge chamber (2) distributed along the length thereof.

12. Apparatus according to claim 11, characterised in that the piston rods (67) of the pneumatic cylinders (66) are connected to the reinforcement strip (59) of the sealing lips (21) by an articulated joint and in that the connection of the piston rods (67) to the reinforcement strips (59) is opposite the center line of the sealing element (60).

13. Apparatus according to any of the claims 3 to 11, characterised in that the control (51) is controlling the pneumatic cylinders (66) in accordance with the working cycle of the individual sludge chambers (2).

14. Apparatus according to any of the claims 10 to 13, characterised in that the hydraulic high pressure generators (22) are in the form of single action cylinders (71) with a pressing plunger (72).

15. Apparatus according to any of the claims 4 to 14, characterised in that the sealing strips (21) are spring-loaded in the direction of the filter belt (10) and in that the springs (27) acting on the sealing strips (27) are supported on the movable pressure plates (9) such that during the pressure stroke the sealing pressure is simultaneously increased.

16. Apparatus according to any of the claims 3 to 15, characterised in that the hydraulic high pressure generators (22) connect the movable pressure plates (9) with the stationary pressure plates (8) to form enclosed frames (52).

17. Apparatus according to claim 14 or 15, characterised in that the hydraulic high pressure generators (22) are in the form of double cylinders (28) containing two pistons (29, 31) and in that in each of the double cyclinders (28) the one piston (29) is performed as a pressure piston and the second piston (31) is performed as a closing piston.

18. Apparatus according to any of the claims 3 to 17, characterised in that the sludge chamber (2) is provided with a plurality of sludge inlets (33).

19. Apparatus according to claim 18, characterised in that the sludge inlets (33) are located in the center line (34) of the pressure membrane (6) and in that the sludge inlets (33) by a connecting pipe (35) are connected to a collecting pipe (36).

20. Apparatus according to any of the preceding claims 3 to 19, characterised in that one or more outlets (41) of a pipe (39) actuacted by valves (40) are provided in the pressure membrane (6) for a washing or cleaning medium.

21. Apparatus according to any of the claims 3 to 20, characterised in that within the sludge chamber (2) between the filter belt (10) and the lower pressure plates (8) there is provided a plate (45) having upwardly open filtrate channels (46) and in that the plate (45) is consisting of a low-friction plastic material.

## Revendications

1. Procédé de déshydratation de boue et de substances similaires, dans lequel la boue est envoyée sous pression, par une pompe, dans au moins une chambre à boue fermée, comportant des surfaces de filtration, et une pression hydrostatique provoquant la déshydratation est constituée dans la chambre à boue, dans lequel, après obtention d'un niveau de pression à définir, la chambre à boue est séparée de la pompe et le volume de la chambre à boue est ensuite réduit et une pression de déshydratation mécanique est produite, laquelle est supérieure à la pression hydrostatique obtenue et dans lequel, pour évacuer le gâteau de filtre réalisé, la surface de filtration est enlevée avec le gâteau de filtre de la chambre à boue, caractérisé en ce que plusieurs chambres à boue fonctionnent en alternance et en cadence, tandis que la pompe, produisant la pression hydrostatique, est entraînée en continu, en ce qu'au moins une chambre à boue est alimentée par la pompe jusqu'à obtention du niveau de pression à définir, en ce qu'ensuite l'alimentation pour la pompe est commutée sur au moins une deuxième des chambres à boue, en ce que pendant l'établissement de la pression de déshydratation hydrostatique dans la deuxième chambre à boue, la déshydratation mécanique supplémentaire est réalisée dans la première chambre à boue, en ce qu'à l'obtention du niveau à définir de la pression hydrostatique dans la deuxième chambre à boue, l'alimentation par la pompe est commutée sur au moins une troisième des chambres à boue, en ce que pendant l'établissement de la pression de déshydratation hydrostatique dans la troisième chambre à boue, la déshydratation mécanique supplémentaire est réalisée dans la deuxième chambre à boue et en même temps le gâteau de filtre est extrait de la première des chambres à boue, en ce que l'arrivée de la boue et l'extraction du gâteau de filtre s'effectuent pratiquement en continu, mais à partir de différentes chambres à boue.

2. Procédé selon la revendication 1, caractérisé en ce que la boue et simultanément envoyée par la pompe dans chacune des chambres à boue, à partir de plusieurs points.

3. Dispositif pour la mise en oeuvre du procédé selon les revendications 1 ou 2, comportant une chambre à boue (2) fermée de tous côtés, qui présente des surfaces de filtration (5) et une entrée de boue (33), laquelle est reliée, par un conduit, à une pompe (7) produisant la pression de filtration, les surfaces de filtration (5) de la chambre à boue (2) étant situées entre des plaques de pression fixes et des plaques de pression mobiles et étant alimentées mécaniquement en pression, après mise hors service de la pompe, et dans lequel la chambre à boue comporte un couvercle (3), contenant les plaques de pression (9) mobiles et un fond (4) contenant les plaques de pression (8) fixes, caractérisé en ce qu'il est prévu au moins trois chambres à boue (2) parallèles entre elles, en ce que les entrées de boue (33) des chambres à boue (2) sont raccordées, par des vannes de fermeture (37) à un collecteur (36), en ce que le collecteur (36) comporte des vannes d'arrêt (38), en ce que les collecteurs (36) des chambres à boue (2) sont raccordés à un conduit principal (50), en ce que le conduit principal (50) est soumis en continu à la pression de la pompe (7), et en ce qu'il est prévu une commande (51) qui commande les vannes d'arrêt (38), les vannes de fermeture (37), les générateurs de haute pression (22) et l'entraînement des surfaces de filtration (5) à la cadence de travail des différentes chambres à boue (2), de manière que l'arrivée de boue et l'extraction du gâteau de filtre s'effectuent pratiquement en continu, mais à partir de différentes chambres à boue (2).

4. Dispositif selon la revendication 3, caractérisé en ce que la chambre à boue (2) est constituée des surfaces de filtration (5), sous la forme d'une bande de filtration (10) circulant horizontalement et en ligne droite, par intermittence, ainsi que d'une membrane de pression (6), en ce que la membrane de pression (6) est pourvue tout autour de baguettes d'étanchéité (21), qui s'appliquent de manière étanche contre la bande de filtration (10), en position fermée, et en ce que pour les plaques de pression (9) mobiles et les baguettes d'étanchéité (21) il est prévu des organes de guidage pour le déplacement vertical.

5. Dispositif selon les revendications 3 ou 4, caractérisé en ce que le couvercle (3) est déplaçable au moyen des plaques de pression (9) mobiles par rapport au fond (4) entre une position fermée et une position ouverte.

6. Dispositif selon les revendications 4 ou 5, caractérisé en ce que les organes de guidage (54) des plaques de pression (9) mobiles et des baguettes d'étanchéité (21) sont conçus à la manière d'organes de guidage communs, en ce que les organes de guidage (54) se présentent sous la forme de tiges (55, 56) verticales placées sur l'une des plaques de pression (8 ou 9) d'une paire de plaques de pression, qui glissent dans des trous de guidage (57, 58) des baguettes d'étanchéité (21) et de l'autre plaque de pression (9 ou 8).

7. Dispositif selon la revendication 6, caractérisé en ce que les baguettes d'étanchéité (21) sont constituées d'une baguette de renfort (59) rigide et d'un corps d'étanchéité (60), en matériau flexible, entourant le pourtour de la membrane de pression (6), en ce que la baguette de renfort (59) est fixée sur la face supérieure (61) de la zone de bordure (62) de la membrane de pression (6) et le corps d'étanchéité (60), faisant face à la baguette de renfort (59), est fixé sur la face inférieure (63) de la zone de bordure (62), en ce que la baguette d'étanchéité (21) présente un bord (64) dépassant du pourtour de la membrane de pression (6) et en ce que les trous de guidage (57) sont réalisés dans le bord (64).

8. Dispositif selon l'une des revendications 3 à 7, caractérisé en ce qu'il est prévu un grand nombre de paires de plaques de pression (8, 9) juxtaposées, en ce que les plaques de pression (8) inférieures sont montées rigidement et en ce que les plaques de pression (9) supérieures sont ajustables, par des générateurs de haute pression (22) hydrauliques, contre les plaques de pression (8) inférieures ou inversement.

9. Dispositif selon l'une des revendications 4 à 8 précédentes caractérisé en ce que la membrane de pression (6) est reliée, au moins dans une zone centrale (23), avec les plaques de pression (9) mobiles, en ce que sur la surface de contact (24) entre les baguettes d'étanchéité (21) et la bande de filtration (10), il est prévu des pièces d'usure (25) interchangeables, et en ce que la membrane de pression (6) est réalisée sous la forme d'une couverture en caoutchouc (26), assemblée aux baguettes d'étanchéité (21).

10. Dispositif selon l'une des revendications 4 à 9, caractérisé en ce que les baguettes d'étanchéité (21), commandées positivement par un mécanisme d'entraînement (73), peuvent monter et descendre, et en ce que le mécanisme d'entraînement (73) est formé par un certain nombre de générateurs de pression (65) commandés, placés sur les baguettes d'étanchéité (21), lesquels générateurs de pression pressent les baguettes d'étanchéité (21), par rapport à la plaque de pression (9) supérieure, au choix en direction de la bande de filtration (10) et les soulèvent de celle-ci.

11. Dispositif selon la revendication 10, caractérisé en ce que les générateurs de pression (65) sont des vérins pneumatiques (66), qui peuvent être actionnés en vue de l'ouverture et de la fermeture de la chambre à boue (2), par relevage et abaissement des baguettes d'étanchéité (21), en ce que les vérins pneumatiques prennent appui contre les plaques de pression (9) supérieures de manière que par compression de l'air se trouvant dans les vérins pneumatiques (66), lors de la course de pression des plaques de pression (9) supérieures, la pression d'étanchéité soit accrue, en ce qu'à chaque extrémité d'une plaque de pression (9) supérieure sont prévus deux vérins pneumatiques (66) et en ce que sur les plaques de pression (9), prévues sur les côtés frontaux de la chambre à boue (2), un certain nombre de vérins pneumatiques (66) sont répartis sur sa longueur.

12. Dispositif selon la revendication 11, caractérisé en ce que les tiges de piston (67) des vérins pneumatiques (66) sont reliées de manière articulée avec la baguette de renfort (59) de la baguette d'étanchéité (21) et en ce que la liaison des tiges de piston (67) avec la baguette de renfort (59) se trouve face à la ligne centrale du corps d'étanchéité (60).

13. Dispositif selon l'une des revendications 3 et 11, caractérisé en ce que la commande (51) commande les vérins pneumatiques (66), à la cadence de travail des différentes chambres à boue (2).

14. Dispositif selon l'une des revendications 10 à 13, caractérisé en ce que les générateurs de haute pression (22) hydrauliques sont des vérins simples (71) avec un piston de pression (72).

15. Dispositif selon l'une des revendications 4 à 14, caractérisé en ce que les baguettes d'étanchéité (21) sont précontraintes par un ressort en direction de la bande de filtration (10) et en ce que les ressorts (27), agissant sur les baguettes d'étanchéité (21), prennent appui contre les plaques de pression (9) mobiles, de manière que pendant la course de pression, la pression d'étanchéité soit en même temps accrue.

16. Dispositif selon l'une des revendications 3 à 15, caractérisé en ce que les générateurs de haute pression (22) hydrauliques relient les plaques de pression (8) fixes avec les plaques de pression (9) mobiles pour former un cadre (52) fermé.

17. Dispositif selon les revendications 14 ou 15, caractérisé en ce que les générateurs de haute pression (22) hydrauliques sont des doubles cylindres (28) contenant deux pistons (29, 31) et en ce que dans chaque double cylindre (28) un piston (29) est un piston de pression et le second piston (31) est un piston de fermeture.

18. Dispositif selon l'une des revendications 3 à 17, caractérisé en ce que la chambre à boue (2) comporte plusieurs entrées de boue (33).

19. Dispositif selon la revendication 18, caractérisé en ce que les entrées de boue (33) sont prévues dans l'axe central (34) de la membrane de pression (6) et en ce que les entrées de boue (33) sont reliées chacune par une conduite de liaison (35) avec le collecteur (36).

20. Dispositif selon l'une des revendications 4 à 19 précédentes, caractérisé en ce que dans la membrane de pression (6) sont réalisées plusieurs sorties (41), commandées par des vannes (40), d'une conduite (39) pour un produit de lavage ou de nettoyage.

21. Dispositif selon l'une des revendications 4 à 20, caractérisé en ce que dans la chambre à boue (2) il est prévu, entre la bande de filtration (10) et les plaques de pression (8) inférieures, une plaque (45) avec canaux de filtrat (46) ouverts vers le haut, et en ce que la plaque (45) est réalisée dans une matière plastique présentant un faible coefficient de friction.
